(19) Europäisches Patentamt
European Patent Office
Office européen des brevets

(11) Veröffentlichungsnummer: **0 005 207**
**B1**

(12) # EUROPÄISCHE PATENTSCHRIFT

(45) Veröffentlichungstag der Patentschrift: **09.12.81**

(51) Int. Cl.³: **C 09 B 55/00**, C 09 B 45/24, D 06 P 3/24, D 06 P 3/32, D 06 P 3/60 // C07C107/00, C07C119/06

(21) Anmeldenummer: **79101160.4**

(22) Anmeldetag: **17.04.79**

(54) **Bis-1:2-chrom-disazo-bisazomethinfarbstoffe, deren Herstellung und deren Verwendung zum Färben von Leder.**

(30) Priorität: **25.04.78 CH 4448/78**
**05.12.78 CH 12396/78**

(43) Veröffentlichungstag der Anmeldung: **14.11.79 Patentblatt 79/23**

(45) Bekanntmachung des Hinweises auf die Patenterteilung: **09.12.81 Patentblatt 81/49**

(84) Benannte Vertragsstaaten: **BE CH DE FR GB IT**

(56) Entgegenhaltungen:
**FR-A-1 442 837**
**FR-A-2 270 302**
**FR-A-2 311 063**

(73) Patentinhaber: **CIBA-GEIGY AG, Patentabteilung Postfach, CH-4002 Basel (CH)**

(72) Erfinder: **Beffa, Fabio, Dr., Burgstrasse 38, CH-4125 Riehen (CH)**

EP 0 005 207 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Die vorliegende Erfindung betrifft Chromkomplexverbindungen, die in Form der freien Säure der Formel

(1)

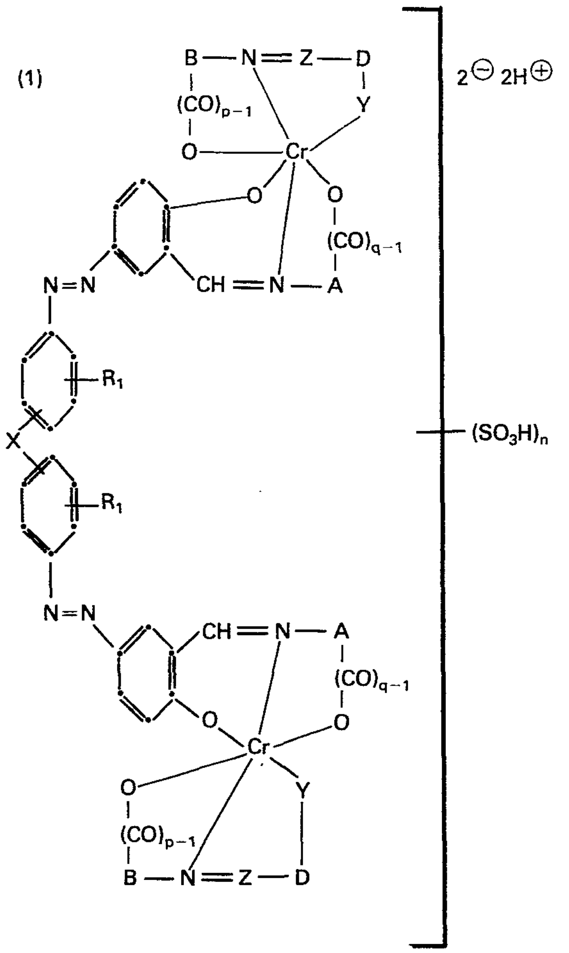

entsprechen, worin X eine direkte Bindung oder ein Brückenglied, Z unabhängig voneinander ein Stickstoffatom oder eine CH-Gruppe, p und q unabhängig voneinander 1 oder 2, Y unabhängig voneinander ein Sauerstoffatom oder eine Gruppe der Formel –NR–, worin R Wasserstoff oder niedrigmolekulares $C_1$–$C_5$ Alkyl bedeutet, wobei, wenn Z eine CH-Gruppe ist, Y ein Sauerstoffatom sein muss, $R_1$ unabhängig voneinander je Wasserstoff oder einen Substituenten, B unabhängig voneinander je einen Benzol- oder Naphthalinrest, D unabhängig voneinander den Rest eines o-Hydroxyaldehyds, wenn Z die –CH-Gruppe bedeutet oder wenn Z ein Stickstoffatom ist, den Rest einer in o-Stellung zu Y kuppelnden Kupplungskomponente oder eines Acetessigsäureamids, n eine ganze Zahl von 2–8, vorzugsweise 2–6, und A unabhängig voneinander je einen Benzol- oder Naphthalinrest oder einen gegebenenfalls substituierten aliphatischen oder cycloaliphatischen Rest bedeutet, wobei q 2 sein muss, wenn A einen aliphatischen oder cycloaliphatischen Rest bedeutet, wobei q 2 sein muss, wenn A einen aliphatischen oder cycloaliphatischen Rest darstellt.

Es sind bereits zahlreiche 1:2-Chromkomplexfarbstoffe bekannt, z.B. aus den französischen Patentschriften 2 270 302, 2 311 063 und 1 442 837. Dort sind jedoch keine Verbindungen beschrieben, welche zwei 1:2-Chromkomplexfarbstoffe über ein Brückenglied miteinander verbunden enthalten.

Als Brückenglied X kommen vor allem gegebenenfalls mit niedrigmolekularem Alkyl substituierte Methylenbrücken wie $-CH_2-$, $-C(CH_3)_2-$,

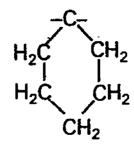 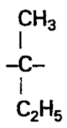 oder 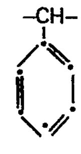

in Frage oder Brückenglieder der Formel –O–, –S–, –NR'–, –SO–, $-SO_2-$, –CO–, –CO–CO–, –CO–NH–, –NH–CO–NH–, –NH–CS–NH–, $-SO_2-NH-$, $-SO_2-NH-SO_2-$, –N=N–, $-CH_2-CH_2-$ oder –CH=CH–, worin R' Wasserstoff oder niedrigmolekulares Alkyl bedeutet.

Als Rest $R_1$ kommen ausser Wasserstoff vor allem die Sulfo- und Carboxygruppe, Halogen, insbesondere Chlor, sowie niedrigmolekulares Alkyl und Alkoxy in Betracht.

Der Begriff «niedrigmolekular» bezeichnet hier und an den anderen Stellen der Beschreibung und der Ansprüche Reste mit bis zu 5 Kohlenstoffatomen.

Die Reste B können eine oder mehrere Sulfogruppen tragen und ausserdem weitersubstituiert sein, z.B. mit niedrigmolekularem Alkyl, Alkoxy, Alkylsulfonyl, Sulfonamido, niedrigmolekularem N-Alkyl-, oder N,N-Dialkylsulfonamido, Chlor, Brom, Nitro, Cyano, Arylazo, insbesondere Phenylazo, Sulfophenylazo oder Sulfonaphthylazo und Arylazoarylenazo, wie Sulfophenylazophenylenazo oder Sulfonaphthylazophenylenazo.

Der Rest –D–Y– leitet sich vor allem von folgenden Kupplungskomponenten ab: Phenole, Naphthole, Naphthylamine, Pyrazolone, Pyrazolimine, Pyridone sowie Acetessigsäureamide, insbesondere -anilide, sowie Barbitursäurederivate und Hydroxychinoline.

Die Reste A haben entweder eine der für das Symbol B genannten Bedeutungen oder sie leiten sich von aliphatischen oder cycloaliphatischen Aminosäuren ab. Im letzteren Fall muss q = 2 sein und A ist vorzugsweise je ein gegebenenfalls substituierter Alkylen-, ein Alkenylen- oder ein Cycloalkylenrest. Ist A ein Alkylenrest, so hat dieser vorzugsweise 1 bis 11 C-Atome und als Substituenten kommen die Hydroxy-, Methylmerkapto-, Methylsulfonyl- oder Sulfogruppe, Arylreste, insbesondere Phenyl oder substituiertes Phenyl, wie z.B. Hydroxyphenyl oder mit niedrigmolekularem Alkyl oder Alkoxy substituiertes Phenyl sowie schliesslich heterocyclische Reste wie Imidazolyl oder Indolyl in Frage. Ist A ein Alkenylenrest, so handelt es sich z.B. um den Vinylenrest oder um den Phenylvinylenrest. Als Cycloalkylenrest kommt vor allem die Cyclohexylengruppe in Betracht.

Von besonderem Interesse sind die α- und

β-Aminosäuren, d.h. A ist vorzugsweise ein gegebenenfalls substituierter Methylen- oder Äthylenrest.

Geeignete Aminosäuren sind z.B. beschrieben in Greenstein und Winitz, Chemistry of Amino Acids, Wiley (1961).

Insbesondere betrifft die vorliegende Erfindung Verbindungen der Formel 1, worin Y ein Sauerstoffatom oder die NH-Gruppe ist und vor allem Chromkomplexe, die in Form der freien Säure der Formel

(2)

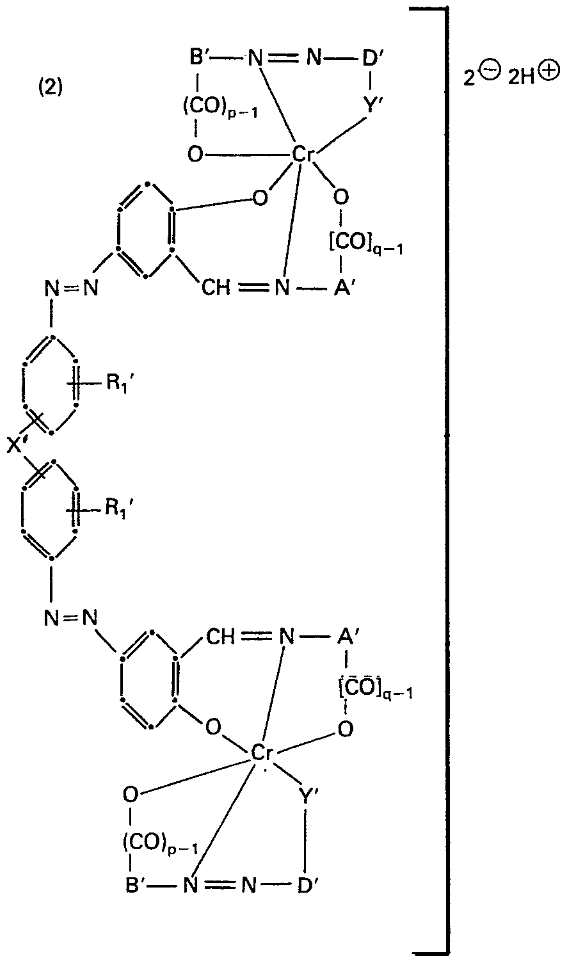

entsprechen, worin X' eine direkte Bindung oder eine Brücke der Formel

$CH_2$–, 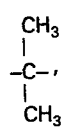 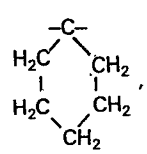, –N=N–

–CH=CH–, –$SO_2$– oder –$SO_2$–NH–$SO_2$–, Y' unabhängig voneinander ein Sauerstoffatom oder die NH-Gruppe, $R_1'$ unabhängig voneinander Wasserstoff, die Sulfogruppe, Chlor, Methyl oder Methoxy, p 1 oder 2, q 1 oder 2, B' unabhängig voneinander je ein gegebenenfalls mit Sulfo-, Arylazo-, Alkyl- oder Alkoxygruppen, Chlor, Brom, Nitro oder Cyano substituierter Phenyl- oder Naphthylrest und D' unabhängig voneinander ein gegebenenfalls mit Hydroxy, Alkyl oder Alkoxy substituierter Phenylrest, ein gegebenenfalls mit Chlor, Acylamino oder Sulfo substituierter Naphthylrest, der Rest eines 1-Aryl-3-methyl-pyrazol-5-ons oder der Rest eines im Anilidkern gegebenenfalls mit Sulfo, Nitro, Chlor, Brom, Alkyl oder Alkoxy substituierten Acetessigsäureanilids ist und worin A' für den Fall dass q = 1 ist, je eine der bei B' angegebenen Bedeutungen hat oder für den Fall dass q = 2 ist, je eine gegebenenfalls z.B. mit Hydroxyl, Methylmerkapto, Methylsulfonyl, Sulfo, Phenyl, Hydroxyphenyl, Imidazolyl oder Indolylsubstituierte Alkylengruppe bedeutet.

Mit «Alkyl» und «Alkoxy» sind hierbei niedrigmolekulare Reste gemeint. Mit «Acylamino» werden niedrigmolekulare Alkanoylamino-, Alkylsulfonylamino- und Alkoxycarbonylaminoreste sowie Aroylamino- und Arylsulfonylaminoreste bezeichnet und der Begriff «Aryl» umfasst vor allem Naphthyl, mit 1 oder 3 Sulfogruppen sustituiertes Naphthyl sowie insbesondere Phenyl und mit Chlor, Brom, Methyl, Äthyl, Methoxy, Nitro oder Sulfo substituiertes Phenyl.

Die neuen Verbindungen werden hergestellt, indem man eine Verbindung der Formel

(3) 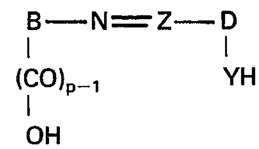 oder

(4) 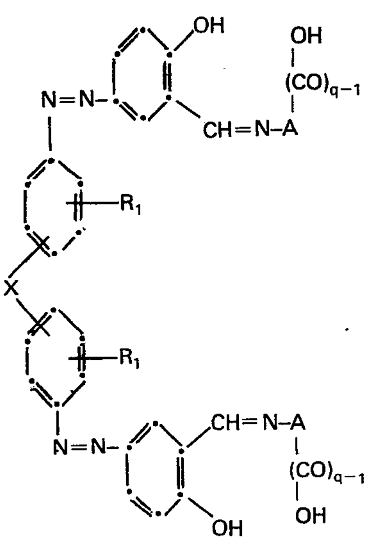

worin $R_1$, X, Y, Z, A, B, D, p und q dasselbe wie in Formel (1) bedeuten, mit einem chromabgebenden Mittel zum 1:1-Chromkomplex bzw. im Falle der Formel (4) zum 2 Atome Chrom pro Molekül enthaltenden Chromkomplex umsetzt und diesen anschliessend mit der nicht metallisierten Verbindung der Formel (4) oder (3) umsetzt, wobei die Ausgangsprodukte 2 bis 8 Sulfogruppen enthalten müssen.

Vorzugsweise stellt man zuerst den 1:1-Chromkomplex der Verbindung der Formel (3) her und setzt diesen mit dem Bisazomethin der Formel (4) im Verhältnis 2:1 um. Zweckmässig wird letzteres

im Reaktionsgemisch in situ hergestellt. Man verfährt hierzu so, dass man den 1:1-Chromkomplex der Verbindung der Formel (3) mit einem Gemisch eines Dialdehyds der Formel

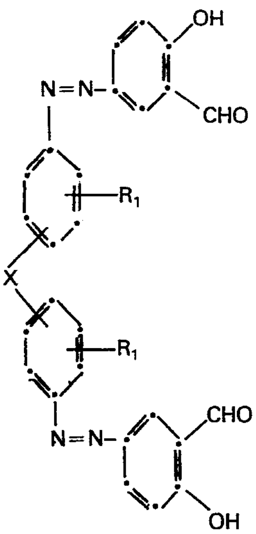

und 2 Acquivalenten eines Amins bzw. einer Aminosäure der Formel

(6) $HO-(CO)_{q-1}-A-NH_2$

worin X, $R_1$, q und A dieselbe Bedeutung wie in Formel (1) haben, umsetzt.

Eine bevorzugte Gruppe der erfindungsgemässen Verbindungen sind diejenigen, worin X eine direkte Bindung oder ein Brückenglied der Formel $-SO_2-$, $-CH_2-$, $-CH=CH-$ oder $-O-$ ist.

Weiterhin werden Verbindungen der Formel (2) bevorzugt, worin die Reste $R_1'$ Wasserstoff oder Sulfo bedeuten, da diese besonders gut zugänglich sind.

Von besonderem Interesse sind auch die Verbindungen der Formel (1), bzw. (2), worin q=2 ist und A bzw. A' einen aliphatischen oder cycloaliphatischen Rest, insbesondere eine gegebenenfalls substituierte Alkylengruppe bedeutet.

Für den Fall, dass in den Verbindungen der Formel (2) q = 1 ist, ist A' hingegen vorzugsweise ein mit Nitro oder Sulfo oder Nitro und Sulfo substituierten Phenylrest.

Die Ausgangsverbindungen der Formel (3) werden in üblicher Weise hergestellt. Sofern Z ein Stickstoffatom ist, wird ein Amin der Formel

(7) $HO-(CO)_{p-1}-B-NH_2$

diazotiert und auf eine Kupplungskomponente der Formel

(8) H-D-YH

gekuppelt.

Geeignete Diazokomponenten der Formel (7) sind z.B.: Anthranilsäure, 4- oder -5-Sulfo- und 4- oder -5-Sulfoamido-anthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, -chlormethyl- und butylsulfon, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-hydroxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-6-sulfonsäureamid, 2-Amino-1-hydroxybenzol-4- oder -5-sulfanthranilid, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 4-(4'- oder 3'-Sulfophenylazo)-2-amino-1-hydroxybenzol, 4-(3'-Sulfonamidophenylazo)-2-amino-1-hydroxybenzol, 4-(4'-Phenylazophenylazo)-2-amino-1-hydroxybenzol, 2-Amino-1-hydroxybenzol-4,6-disulfosäure.

Statt der oben genannten Amine der Formel (7) kommen als Diazokomponenten auch entsprechende Methoxyverbindungen in Betracht, wie Anisidin, 4- oder 5-Chloranisidin, 4- oder 5-Nitroanisidin oder Anisidin-4- oder 5-Sulfosäure, wobei die Methoxygruppe bei der Chromierung in eine OH-Gruppe umgewandelt wird.

Von besonderem Interesse sind die Verbindungen, worin B bzw. B' ein nitro- und/oder sulfogruppenhaltiger Phenyl- oder Naphthylrest ist.

Der Rest D bzw. D' leitet sich besonders von folgenden Gruppen von Kupplungskomponenten ab: Naphthole, die gegebenenfalls mit Chlor, Acylamino-, Amino-, Sulfo-, Sulfonamido-, N-mono- oder N,N-disubstituierten Sulfonamidogruppen und Sulfongruppen substituiert sind, wobei diese Gruppen dieselben Bedeutungen haben, die vorne angegeben worden sind.

Naphthylamine, die gegebenenfalls mit Sulfo-, Sulfonamido-, mono- oder disubstituierten Sulfonamido- oder Sulfongruppen substituiert sind.

5-Pyrazolone oder 5-Aminopyrazole, die in 1-Stellung vorzugsweise einen gegebenenfalls mit Chlor, Nitro, niedrigmolekularen Alkyl- und Alkoxygruppen, Sulfonamido-, N-alkylierten Sulfonamidgruppen, Sulfon- oder insbesondere Sulfogruppen substituierten Phenyl- oder Naphthylrest besitzen.

Acetessigsäureanilide die im Anilidkern gegebenenfalls mit Chlor, Brom, niedrigmolekularen Alkyl-, Alkoxy-, Sulfon-, Sulfonamido-, N-mono- oder N,N-disubstituierten Sulfonamidogruppen und Sulfogruppen substituiert sein können.

Phenole, die mit niedrigmolekularen Acylaminogruppen und/oder mit vorzugsweise 1 bis 5 Kohlenstoffatomen enthaltenden Alkylgruppen substituiert sind und in o-Stellung kuppeln.

2,6-Dihydroxy-3-cyano- oder -carbonamido-4-alkylpyridin und 6-Hydroxy-2-pyridone, die in 1-Stellung durch gegebenenfalls substituiertes Alkyl, z.B. Methyl, Isopropyl, β-Hydroxyäthyl, β-Aminoäthyl oder γ-Isopropoxypropyl substituiert sind, in 3-Stellung eine Cyano- oder Carbonamidogruppe und in 4-Stellung eine niedrigmolekulare Alkylgruppe, insbesondere Methyl tragen.

Barbitursäure und an den Stickstoffatomen mit niedrigmolekularem Alkyl oder Aryl, insbesondere Phenyl substituierte Barbitursäuren.

Dihydroxychinoline.

Beispiele solcher Kupplungskomponenten sind: 2-Naphthol, 1,3- oder 1,5-Dihydroxynaphthalin, 2-Naphthol-6-β-hydroxyäthylsulfon, 1-Naphthol, 1-Acetylamino-7-naphthol, 1-Propionylamino-7-naphthol, 1-Carbomethoxyamino-7-naphthol, 1-Carboäthoxyamino-7-naphthol, 1-Carbopropoxyamino-7-naphthol, 1-Dimethylaminosulfonylamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 1-Naphthol-3-, -4- oder -5-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1-sulfosäure, 1-Naphthylamin-4-oder -5-sulfosäure-, 2-Aminonaphthalin-7-sulfosäure, 1-Naphthylamin-4-sulfonamid, 2-Aminonaphthalin-6-sulfonamid, 2-Phenylaminonaphthalin, 2-(3'-Chlorphenyl)-aminonaphthalin, 2-Aminonaphthalin-6-sulfonsäure-N-methylamid oder -6-sulfosäure, 1,3-Dimethylpyrazol-5-on, 3-Methylpyrazol-5-on, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-[3'- oder 4'-(β-Hydroxyäthylsulfonyl)-phenyl]-3-methylpyrazol-5-on, 1-(2', 3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'-oder 4'-Chlorphenyl)-3-methylpyrazol-5-on, 1-(2'-, 3'- oder 4'-Nitrophenyl)-3-methylpyrazol-5-on, 1-(2'-, 5'- oder 3'-, 4'-Dichlorphenyl)-3-methylpyrazol-5-on, 1-(2'-, 3'- oder 4'-Sulfamoylphenyl)-3-methylpyrazol-5-on, 1-(2'-, 5'-Dichlor-4'-sulfophenyl)-3-methylpyrazol-5-on, 1-(2', 3'- oder 4'-Methylsulfonylphenyl)-3-methylpyrazol-5-on, 1-(2'-, 3'- oder 4'-Sulfophenyl)-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoacet-o-chloranilid, Acetoacet-anilid-3-oder -4-sulfonamid, Acetoacet-m-xylidid, Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenol, 2-Isopropyl-4-methylphenol, 2-oder 3-Acetylamino-4-methylphenol, 2-Methoxycarbonylamino-4-methylphenol, 2-Äthoxycarbonylamino-4-methylphenol und 3,4-Dimethylphenol, Resorcin, 2,6-Dihydroxy-3-cyano-4-methylpyridin, 1-Methyl-3-cyano-4-äthyl-6-hydroxypyridon, 1-Amino-3-cyano-4-methyl-6-hydroxypyridon, 1-Phenyl-3-carbonamido-4-methyl-6-hydroxypyridon, Barbitursäure, 2,4-Dihydroxychinolin.

Vorzugsweise ist D bzw. D' ein gegebenenfalls mit Sulfo oder Amino und Sulfo substituierter Naphthylrest oder ein gegebenenfalls mit niedrigmolekularem Alkyl substituierter Phenylrest.

Sofern Z eine –CH-Gruppe ist, wird ein Amin der Formel (7) mit einem o-Hydroxybenzaldehyd oder o-Hydroxy- naphthaldehyd umgesetzt. Geeignete Aldehyde sind beispielsweise:

2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, sowie die davon ableitbaren, mit Arylazo oder Arylazoarylenazo substituierten Aldehyde.

Die Dialdehyde der Formel (5) werden erhalten, indem man ein Diamin der Formel

(9) 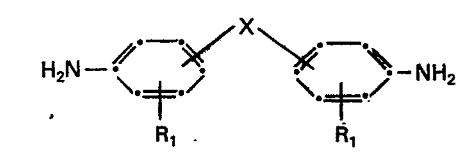

tetrazotiert und mit 2 Äquivalenten Salicyladehyd kuppelt.

Geeignete Diamine der Formel (9) sind z.B. 4,4'-Diaminodiphenyl, 2,2'-Diaminodiphenyl-4,4'-disulfosäure, 4,4'-Diaminodiphenyl-3-sulfosäure, 4,4'-Diaminodiphenyl-2,2'- oder 3,3'-disulfosäure, 4,4'-Diamino-3,3'-dimethoxydiphenyl, 4,4'-Diamino-3,3' oder 2,2'-dimethyldiphenyl, 3,3'- oder 4,4'-Diaminodiphenylsulfon, 4,4'-Diamino-benzophenon, 4,4'-Diaminodiphenyläther, 4,4'-Diaminodiphenylsulfid, 4,4'-Diamino-diphenylsulfoxyd, 4,4'-Diaminodiphenylamin, 4,4'-Diaminodiphenyl-2-sulfosäure, 4,4'-Diaminobenzil, 3,3'- oder 4,4'-Diaminobenzanilid, 3,3'-Diamino-benzanilid-4-sulfosäure, 4,4'-Diaminobenzanilid-3-sulfosäure, 3,3'-oder 4,4'-Diaminodiphenylharnstoff, 4,4'-Diaminodiphenylharnstoff-3,3'-disulfosäure, 4,4'-Diaminodiphenyl-thioharnstoff, 4,4'-Diaminobenzol-sulfanilid, 3,3'- oder 4,4'-Diaminodiphenyldisulfimid, 4,4'-Dichlor-3,3'-diaminodiphenyldisulfimid, 4,4'-Diaminoazobenzol, 4,4'-Diaminostilben-2,2'-disulfosäure, 4,4'-Diamino-diphenylmethan, 4,4'-Diamino-3,3'-dimethyl-diphenylmethan, 3,3'-Diamino-4,4'-dimethyldiphenylmethan, 4,4'-Diaminotriphenylmethan, 4,4'-Diaminodiphenyläthan, 4,4'-Diamino-3,3'-dimethyl-diphenyläthan, 2,2-Bis-(4'-aminophenyl)-propan, 1,1-Bis-(4'-aminophenyl)-cyclohexan und 1,1-Bis-(4'-amino-3'-methyl-phenyl)-cyclohexan.

Zur Herstellung des Bisazomethins werden die Dialdehyde der Formel (5) mit 2 Äquivalenten eines Amins oder einer Aminosäure der Formel (6)

kondensiert. Als Verbindungen der Formel (6) kommen einerseits dieselben aromatischen Amine in Betracht, wie für die Diazokomponenten der Formel (7) und andererseits aliphatische oder cycloaliphatische Aminosäuren.

Als Beispiele derartiger Aminosäuren seien genannt: Glykolkoll, α-Alanin, β-Alanin, 4-Aminobuttersäure, 5-Aminovaleriansäure, 6-Aminocapronsäure, 7-Aminoheptansäure, 8-Aminocaprylsäure, 11-Aminoundecansäure, 12-Aminolaurinsäure, Serin, 5-Benzylcystein, Phenylglycin, Phenylalanin, Norleucin, Norvalin, Leucin, Lysin, Methionin, Methioninsulfon, Threonin, Histidin, Tryptophan, Tyrosin, 2-Aminocyclohexancarbonsäure.

Es ist zweckmässig, das Bisazomethin nicht zu isolieren, sondern es im gleichen Reaktionsgemisch, in dem es an den 1:1-Chromkomplex der Verbindung der Formel (3) angelagert wird, in situ herzustellen.

Besonders bevorzugt werden als Aminosäuren der Formel (6) Glykokoll, α- und β-Alanin. Unter den aromatischen Aminen der Formel (6) sind vor allem solche, worin q=1 ist und A einen mit Nitro und/oder Sulfo substituierten Phenylenrest bedeutet, von Interesse.

Vorzugsweise werden die Ausgangsprodukte so gewählt, dass der fertige Komplex 2 bis 6 Sulfogruppen enthält.

Die Herstellung des 1:1-Chromkomplexes der Verbindung der Formel (3) bzw. (4) erfolgt nach üblichen, an sich bekannten Methoden, z.B. indem man in saurem Medium mit einem Salz des dreiwertigen Chroms, wie Chromformiat, Chromsulfat, Chromchloridhexahydrat oder Chromfluorid, bei Siedetemperatur oder gegebenenfalls bei 100 °C übersteigenden Temperaturen umsetzt. Dreiwertiges Chrom kann auch im Reaktionsgemisch aus Chrom-VI-Verbindungen, z.B. Chromat, erzeugt werden, wenn man gleichzeitig ein Reduktionsmittel zugibt. Die Metallisierung kann in wässerigen, organisch-wässerigen oder in rein organischen Lösungsmitteln, wie Alkoholen oder Ketonen durchgeführt werden, gegebenenfalls unter Zusatz von lösungsvermittelnden oder chromierungsbeschleunigenden Substanzen.

Die Umsetzung des 1:1-Chromkomplexes der Verbindungen der Formel (3) bzw. (4) mit den metallfreien Verbindungen der Formel (4) bzw. (3), resp. die Eintopfreaktion zwischen einem 1:1-Chromkomplex einer Verbindung der Formel (3), eines Amins oder einer Aminosäure der Formel (6) und einem Dialdehyd der Formel (5) erfolgt zweckmässig in neutralem bis schwach alkalischem Medium, in offenem oder geschlossenem Gefäss, bei erhöhter Temperatur, z.B. bei Temperaturen zwischen 50 und 120 °C. Man kann in organischen Lösungsmitteln, z.B. Alkoholen oder Ketonen arbeiten oder in wässeriger Lösung, wobei Zusätze von Lösungsmitteln, wie z.B. von Alkoholen, Formamid etc., gegebenenfalls die Umsetzung fördern können. Es empfiehlt sich im allgemeinen möglichst stöchiometrische Mengen des chromhaltigen 1:1-Komplexes und des metallfreien Farbstoffes miteinander umzusetzen. Ein Überschuss an metallhaltigem Farbstoff wirkt sich in der Regel weniger nachteilig aus als ein solcher an metallfreiem Farbstoff.

Statt eines einheitlichen 1:1-Chromkomplexes kann auch ein Gemisch verschiedener Dialdehyde und Amine eingesetzt werden.

Die nach den obigen Verfahren erhältlichen, neuen chromhaltigen Mischkomplexe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen Polyamidmaterialien, wie Wolle, synthetische Polyamidfasern, insbesondere aber zum Färben von Leder.

Die neuen Verbindungen sind farbstark und decken gut. Sie haben ein gutes Ziehvermögen bei gleichzeitig guten Echtheiten wie Wasch-, Wasser-, Schweiss-, Reib-, Diffusions-, Licht- und Alkaliechtheit. Besondere Erwähnung verdient das gute Aufbauvermögen auf dieversen Ledersorten, sowohl auf reinchrom wie auch auf mit vegetabilen oder synthetischen Gerbstoffen nachgegerbtem Leder. Man erhält kräftige orange bis braune und olive Nuancen.

In den nachfolgenden Beispielen bedeuten die Teile, sofern nichts anderes angegeben wird, Gewichtsteile und die Prozente Gewichtsprozente.

Beispiel 1

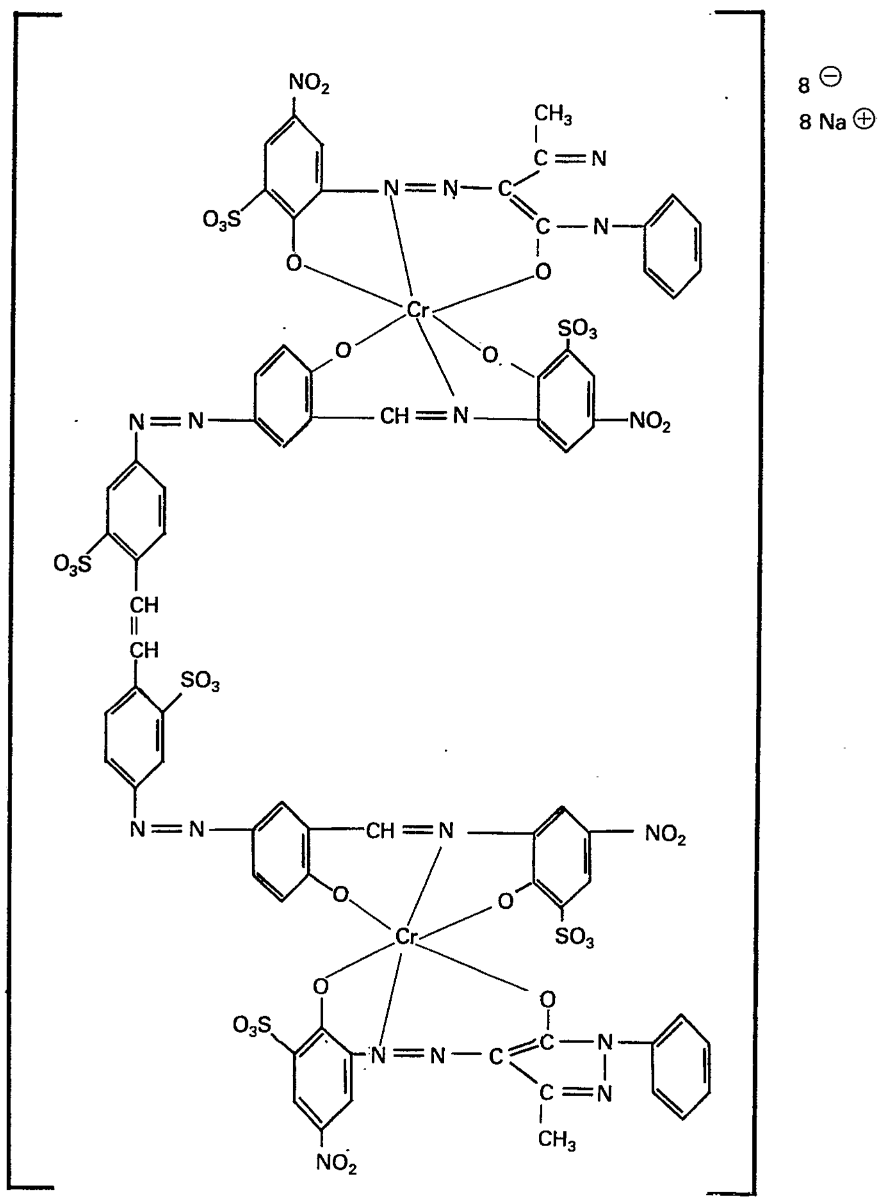

41,9 Teilen des Monoazofarbstoffes aus diazotierter 4-Nitro-2-amino-1-hydroxybenzol-6-sulfonsäure und 1-Phenyl-3-methyl-5-pyrazolon werden mit 26,7 Teilen Chromchloridhexyhydrat in 750 Volumteilen Äthylenglykol solange bei 120 bis 125° gerührt, bis die Ausgangsverbindung verschwunden ist. Die erhaltene Lösung des Chromkomplexes vom Typus 1 Atom Chrom:1 Molekül Farbstoff wird hierauf bei 80 bis 85° mit 23,4 Teilen 4-Nitro-2-amino-1-hydroxybenzol-6-sulfonsäure, 31,8 Teilen Kupplungsprodukt aus tetrazotierter 4,4'-Diaminostilben-2,2'-disulfonsäure und Salicylaldehyd versetzt und solange bei dieser Temperatur gehalten, bis die Anlagerungsreaktion beendet ist. Der pH-Wert des Reaktionsgemisches wird durch Zugabe von 5n Natronlauge auf einen pH-Wert von 7 bis 7,5 gestellt und gehalten.

Hierauf wird der neue, chromhaltige Farbstoff durch Zugabe von gesättigter Natriumchloridlösung ausgefällt, abfiltriert und vorsichtig getrocknet.

Er stellt ein dunkles Pulver dar, das sich in Wasser mit oranger Farbe löst und Leder in orangen Tönen von allgemein guten Echtheiten färbt.

Beispiel 2

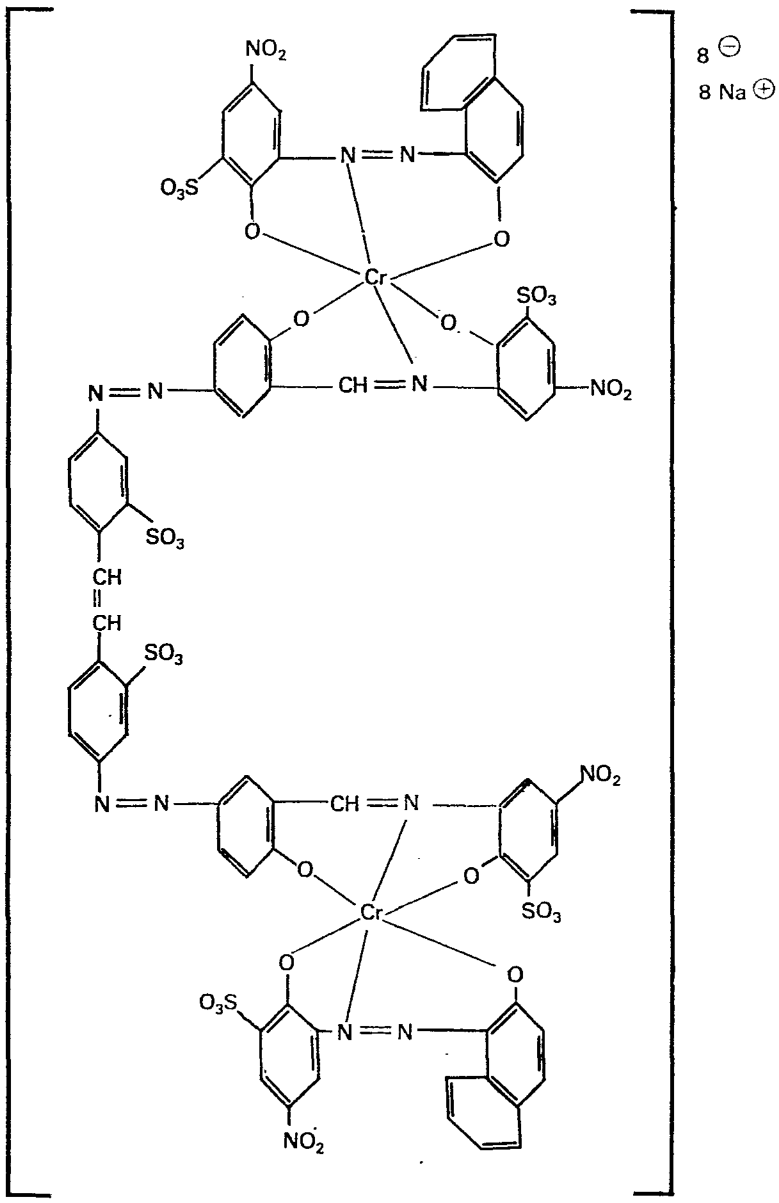

In 1000 Volumteilen Wasser suspendiert man 43,9 Teile der komplexen Chromverbindung vom Typus 1 Atom Chrom:1 Molekül Farbstoff, welche 5,2 Teilen Chrom und 38,9 Teilen Monoazofarbstoff aus diazotierter 4-Nitro-2-amino-1-hydroxybenzol-6-sulfonsäure und 2-Hydroxynaphthalin entspricht mit 23,4 Teilen 4-Nitro-2-amino-1-hydroxybenzol-6-sulfonsäure und 31,8 Teilen Disazofarbstoffs aus 4,4'-Diaminostilben-2,2'-disulfonsäure und Salicylaldehyd. Man erhitzt das Reaktionsgemisch auf 80 bis 85 ° und erhöht gleichzeitig den pH-Wert der Suspension auf 7 bis 7,5 durch Zugabe von 5n Natronlauge und hält es solange bei dieser Temperatur und konstantem pH-Wert durch Zugabe von 5n Natronlauge, bis die Ausgangsprodukte verschwunden sind.

Der neue, chromhaltige Farbstoff wird durch Zugabe von Natriumchlorid ausgefällt. Hierauf filtriert man ihn ab und wäscht ihn aus mit verdünnter Natriumchloridlösung. Nach dem Trocknen stellt er ein dunkles Pulver dar, das sich in Wasser mit brauner Farbe löst und Leder in braunen Tönen von allgemeinen guten Echtheiten färbt.

Beispiel 3

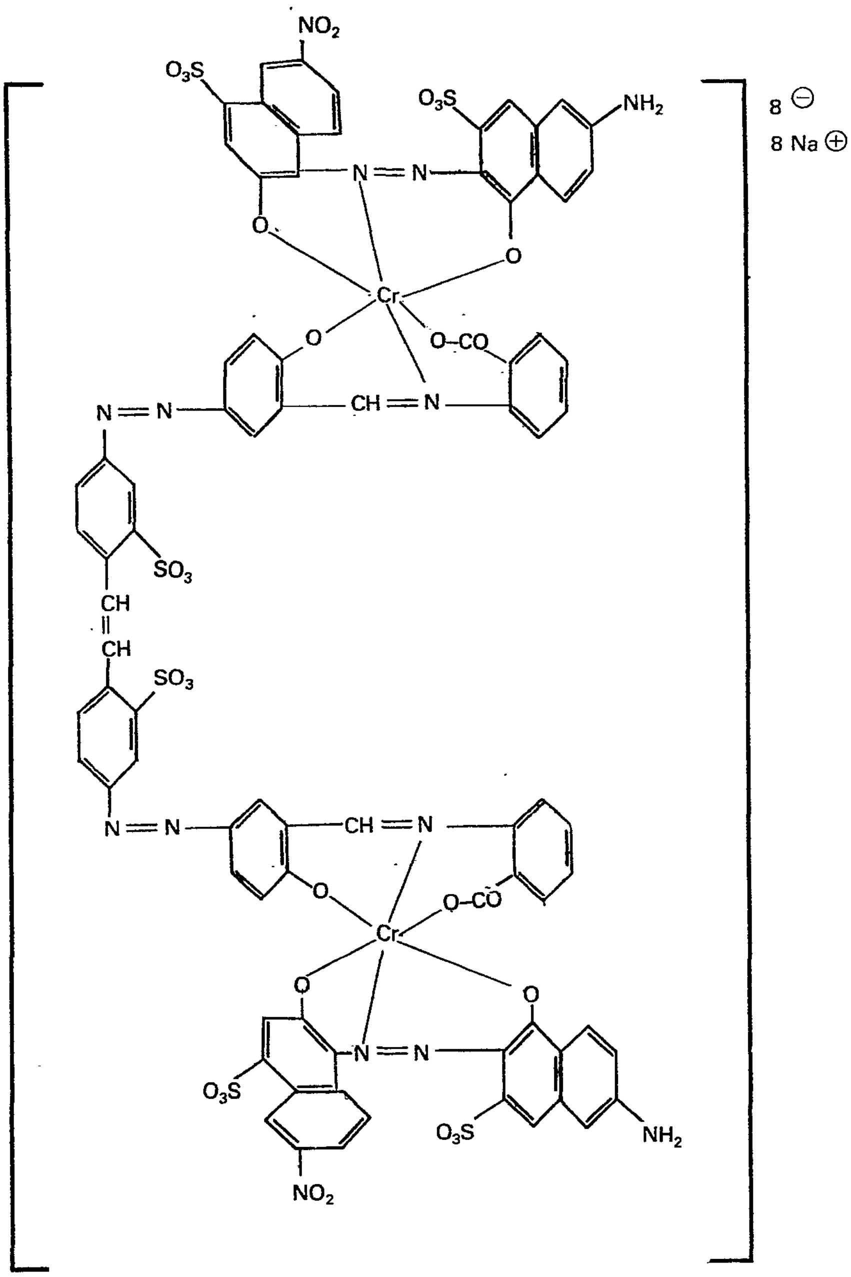

In 750 Volumteilen Wasser suspendiert man 58,4 Teile der komplexen Chromverbindung vom Typus 1 Atom:1 Molekül Farbstoff, welche 5,2 Teilen Chrom und 53,4 Teilen Monoazofarbstoff aus diazotierter 6-Nitro-1-amino-2-hydroxynaphthalin-4-sulfonsäure und 2-Amino-5-hydroxynaphthalin-7-sulfonsäure entspricht mit 13,7 Teilen 2-Aminobenzoesäure und 31,8 Teilen Disazofarbstoff aus 4,4'-Diaminostilben-2,2'-disulfonsäure und Salicylaldehyd. Hierauf erhitzt man das Gemisch auf 80 bis 85 ° und erhöht den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind. Der erhaltene neue chromhaltige Farbstoff wird anschliessend durch Zugabe von Natriumchlorid ausgefällt. Man filtriert ihn ab und trocknet ihn. Nach dem Trocknen stellt er ein dunkles Pulver dar, das sich in Wasser mit oliver Farbe löst und Leder in oliven Tönen färbt.

Beispiel 4

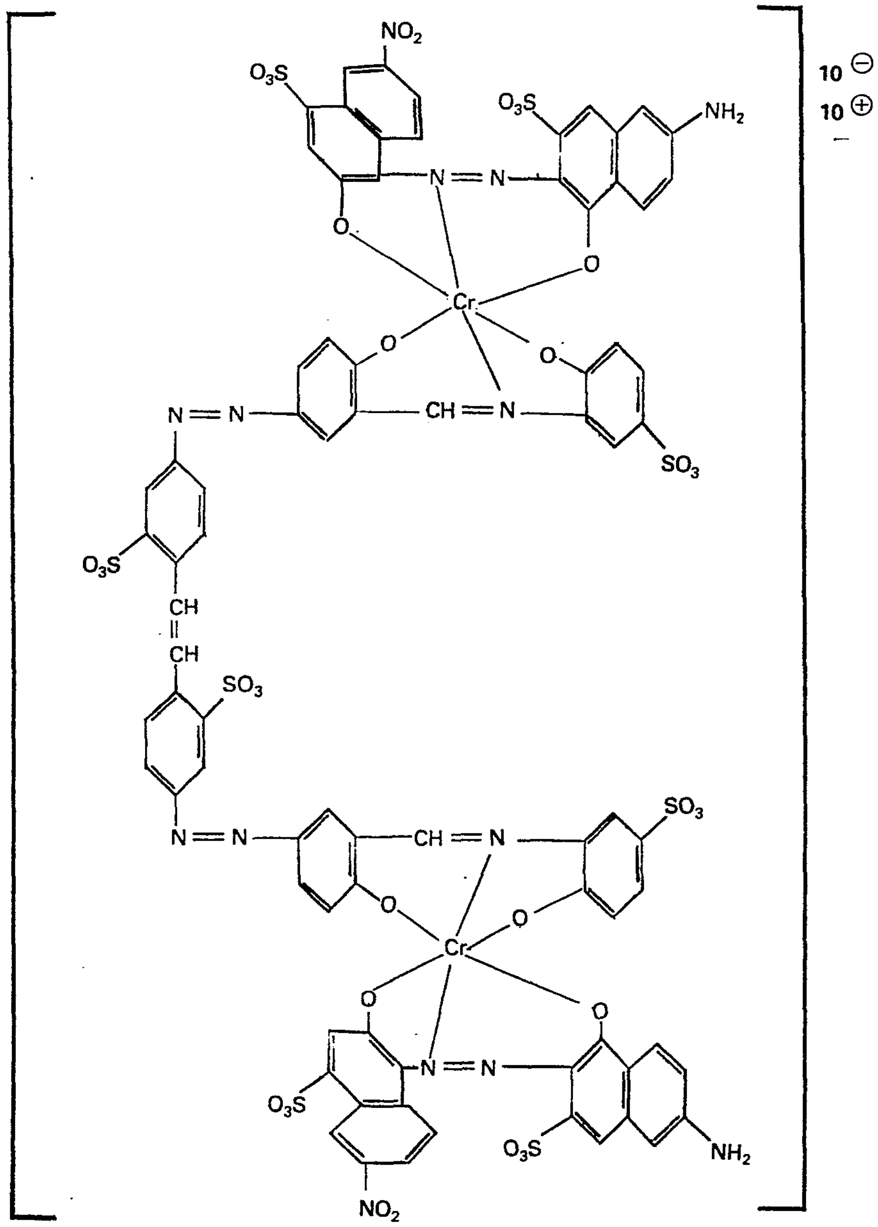

In 750 Volumteilen Wasser suspendiert man 58,4 Teile der komplexen Chromverbindung vom Typus 1 Atom Chrom:1 Molekül Farbstoff, welche 5,2 Teilen Chrom und 53,4 Teilen Monoazofarbstoff aus diazotierter 6-Nitro-1-amino-2-hydroxynaphthalin-4-sulfonsäure und 2-Amino-5-hydroxynaphthalin-7-sulfonsäure entspricht mit 18,9 Teilen 2-Amino-1-hydroxybenzol-4-sulfonsäure und 31,8 Teilen Disazofarbstoff aus 4,4'-Diaminostilben-2,2'-disulfonsäure und Salicylaldehyd.

Hierauf erhitzt man das Gemisch auf 80 bis 85 ° und erhöht den pH-Wert der erhaltenen Lösung auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind. Der erhaltene, neue chromhaltige Farbstoff wird durch Eindampfen der Lösung isoliert. Nach dem Trocknen stellt er ein dunkles Pulver dar, das Leder aus saurem Bade in braunen Tönen von allgemein guten Echtheiten färbt.

Weitere Farbstoffe mit ähnlichen Eigenschaften erhält man, wenn man in analoger Weise den 1:1-Chromkomplex der in Kolonne III der folgenden Tabelle I angegebenen Verbindung mit dem in Kolonne II angegebenen Amin und den in Kolonne I angegebenen Aldehydkomponenten umsetzt. Diese färben Leder in den in Kolonne IV angegebenen Nuancen.

| Nr. | I | II | III | IV |
|---|---|---|---|---|
| 1 | 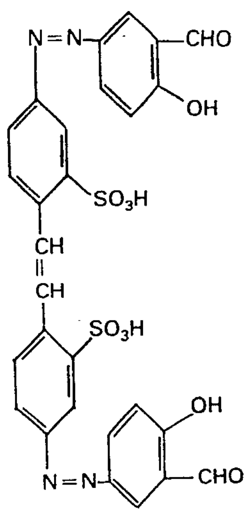 | 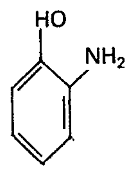 | 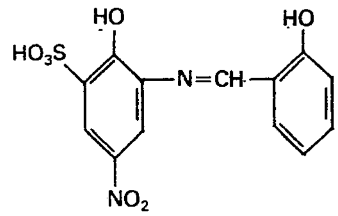 | gelborange |
| 2 | do. | 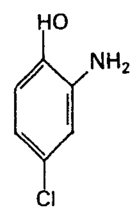 | do. | gelborange |
| 3 | do. | 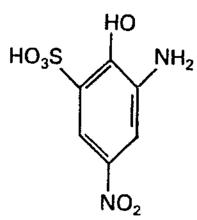 | 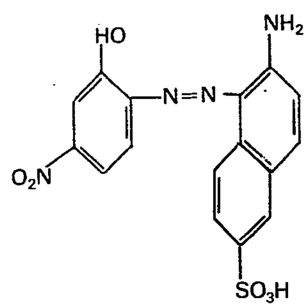 | braun |
| 4 | do. | 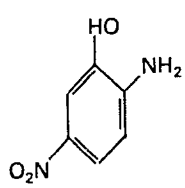 | 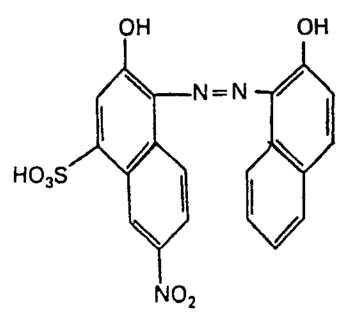 | braun |
| 5 | do. | 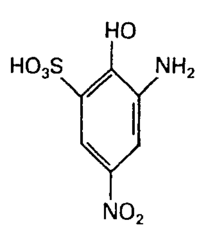 | 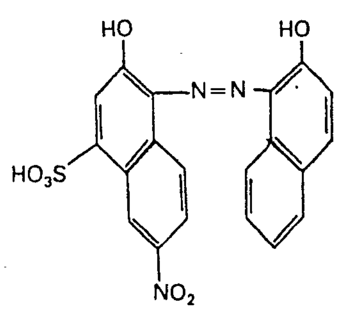 | braun |

| Nr. | I | II | III | IV |
|---|---|---|---|---|
| 6 | 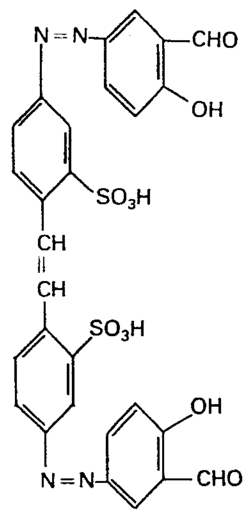 | 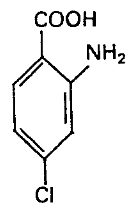 | 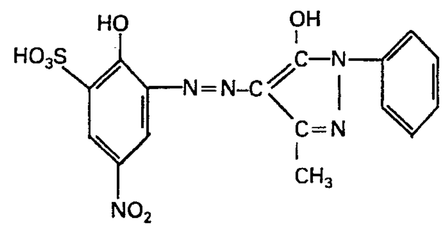 | orange |
| 7 | do. | 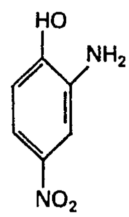 | 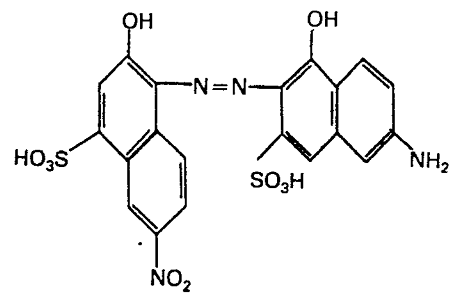 | olivebraun |
| 8 | do. | 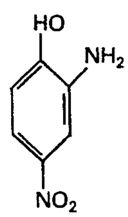 | 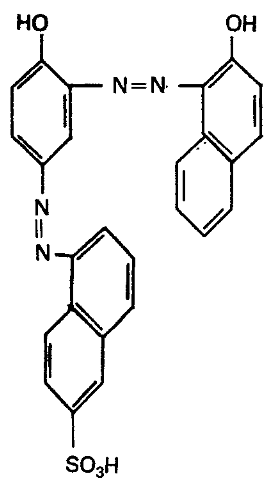 | braun |
| 9 | do. | 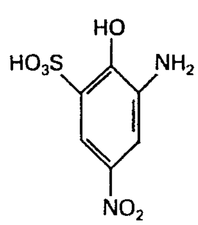 | do. | braun |

| Nr. | I | II | III | IV |
|---|---|---|---|---|
| 10 | 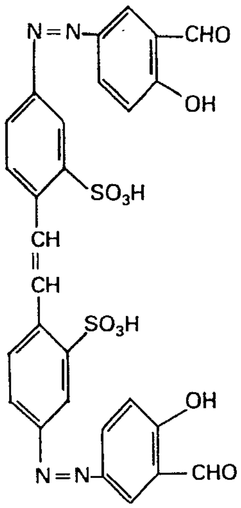 | 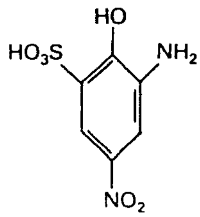 | 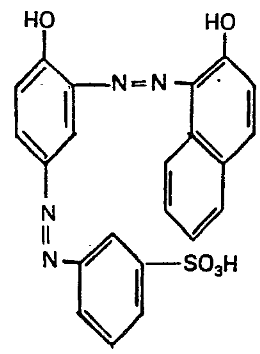 | braun |
| 11 | do. | 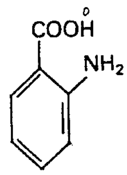 | 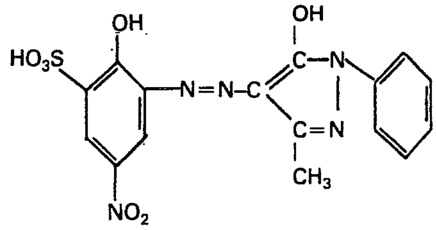 | orange |
| 12 | do. | do. | 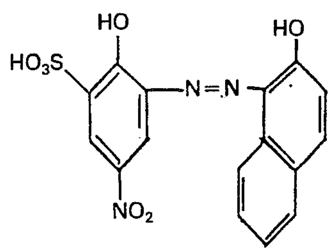 | braun |
| 13 | 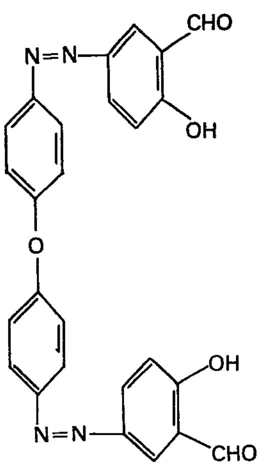 | 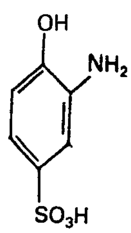 | 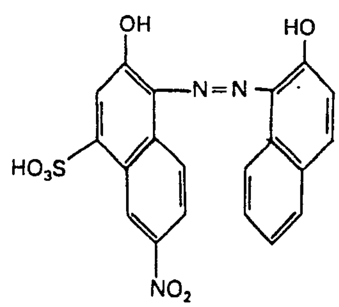 | olivebraun |
| 14 | do. | do. | 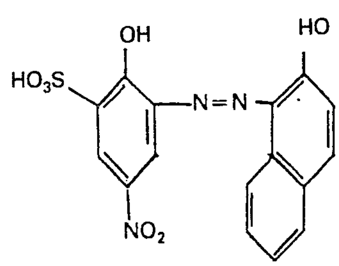 | braun |

| Nr. | I | II | III | IV |
|---|---|---|---|---|
| 15 | 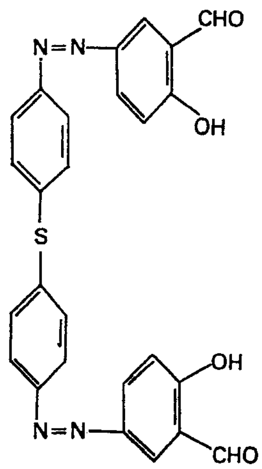 | 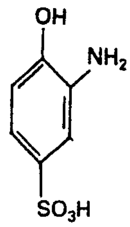 | 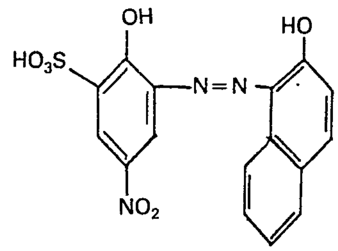 | braun |
| 16 | do. | do. | 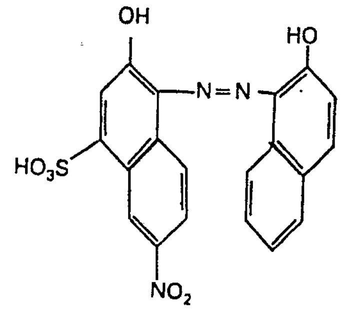 | olivebraun |
| 17 | 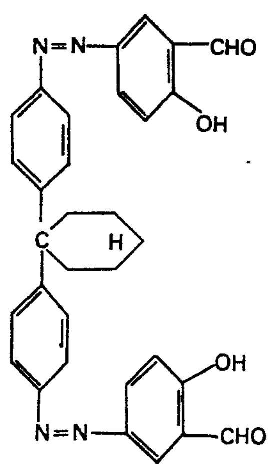 | 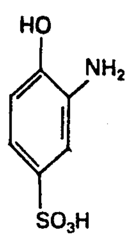 | 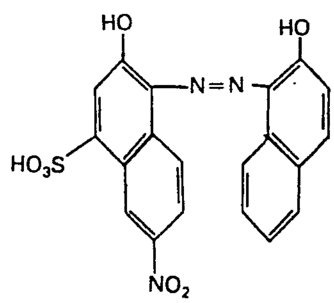 | olivebraun |
| 18 | 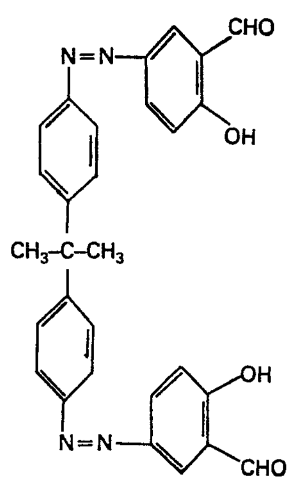 | 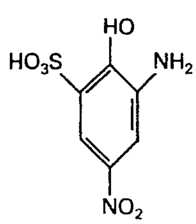 | 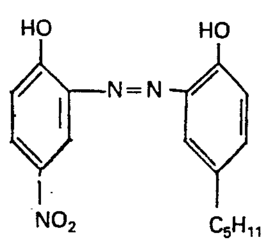 | braun |

| Nr. | I | II | III | IV |
|---|---|---|---|---|
| 19 | 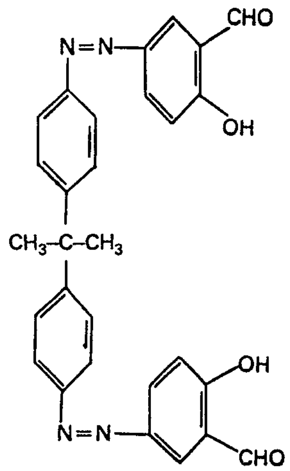 | 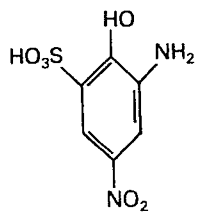 | 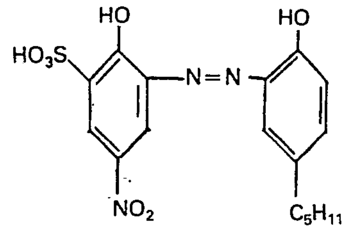 | braun |
| 20 | do. | do. | 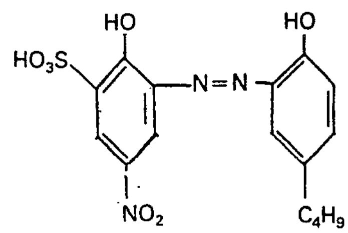 | braun |
| 21 | 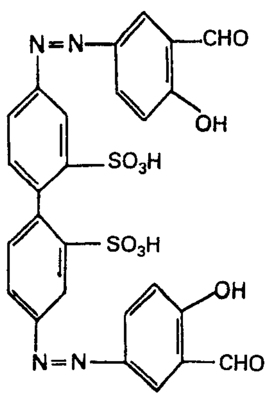 | 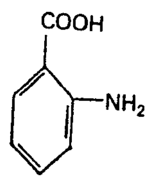 | 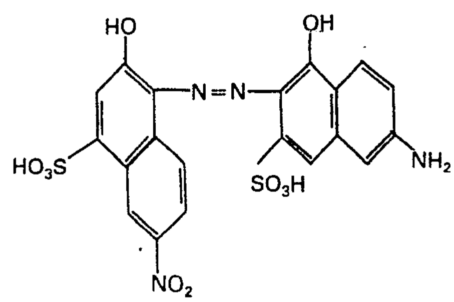 | grünolive |
| 22 | do. | 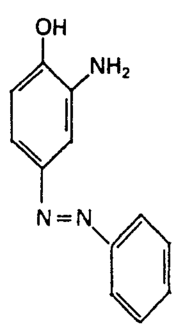 | 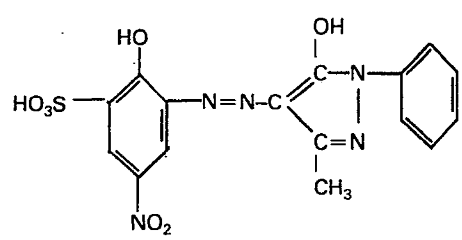 | orange |

| Nr. | I | II | III | IV |
|---|---|---|---|---|
| 23 | 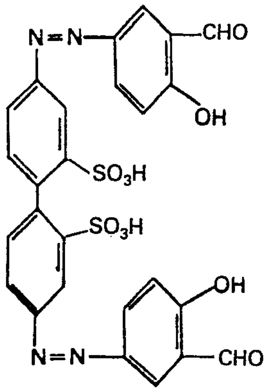 | 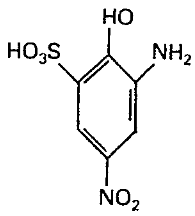 | 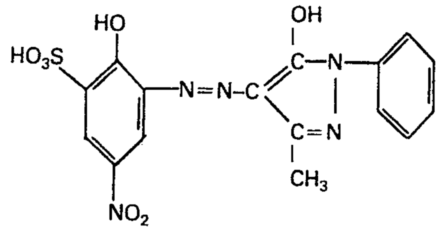 | orange |
| 24 | do. | 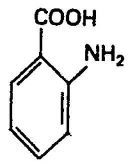 | do. | orange |
| 25 | do. | 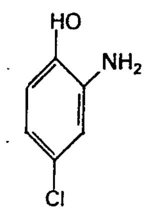 | 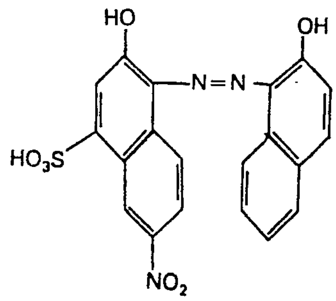 | braun |
| 26 | do. | 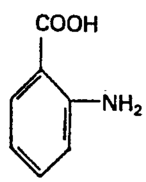 | do. | braunolive |
| 27 | do. | 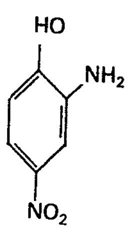 | 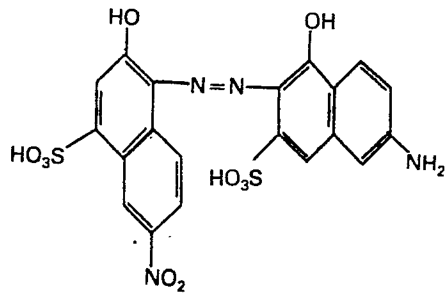 | olive |
| 28 | do. | do. | 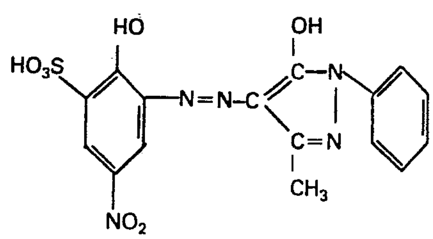 | orange |

| Nr. | I | II | III | IV |
|---|---|---|---|---|
| 29 | 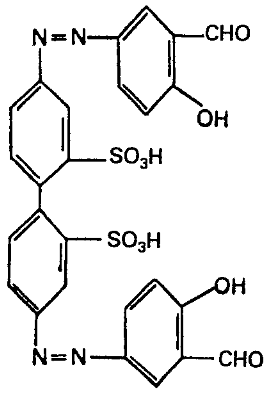 | 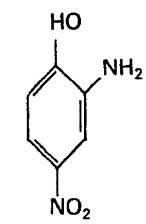 | 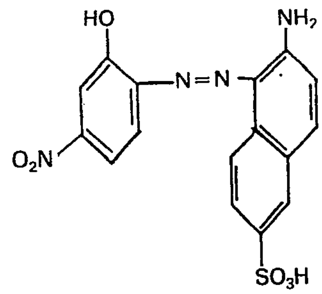 | olive |
| 30 | 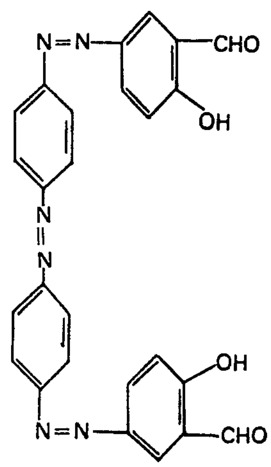 | 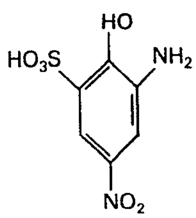 | 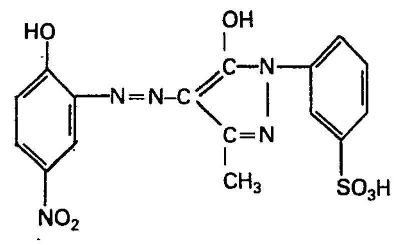 | rotorange |
| 31 | do. | do. | 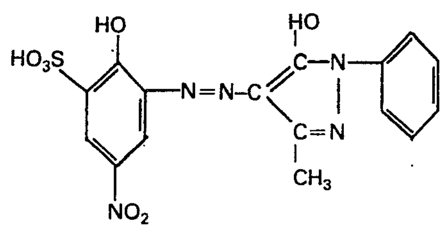 | rotorange |
| 32 | 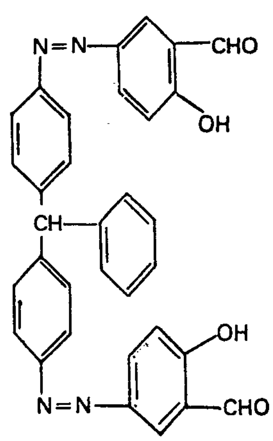 | do. | 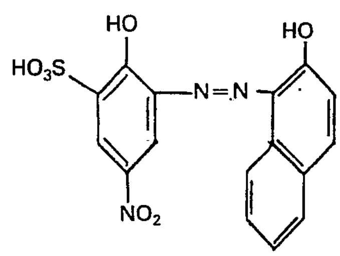 | braun |
| 33 | do. | 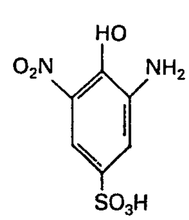 | do. | braun |

| Nr. | I | II | III | IV |
|---|---|---|---|---|
| 34 | 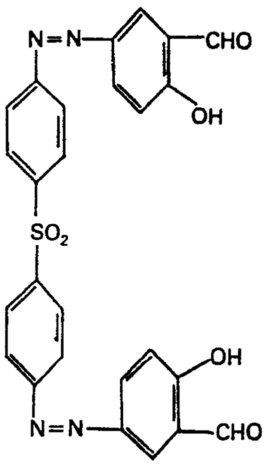 | 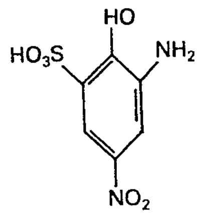 | 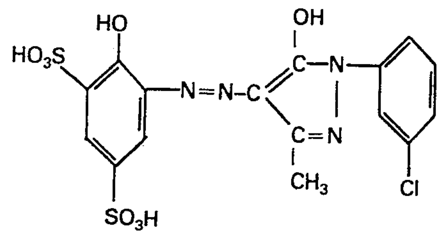 | orange |
| 35 | do. | do. | 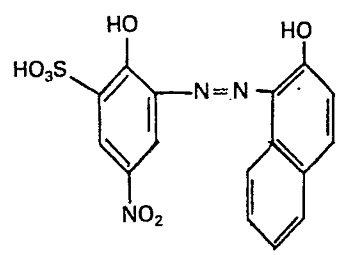 | braun |
| 36 | 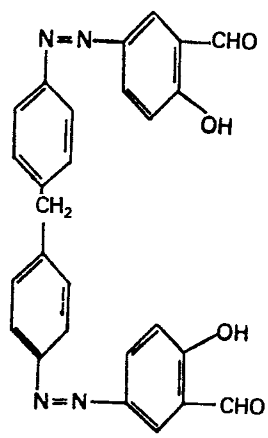 | 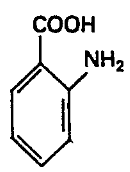 | 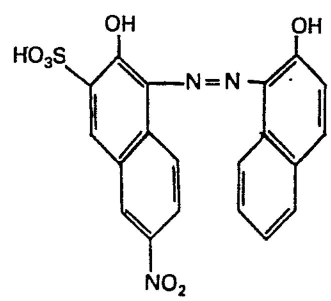 | olive |
| 37 | 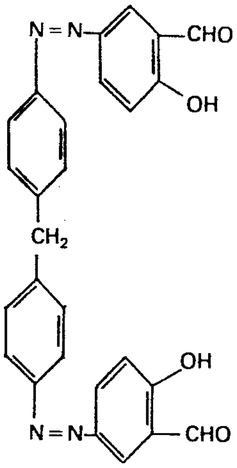 | 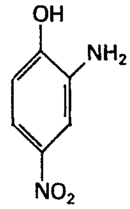 | 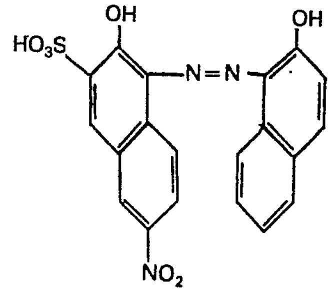 | olivebraun |

| Nr. | I | II | III | IV |
|---|---|---|---|---|
| 38 | 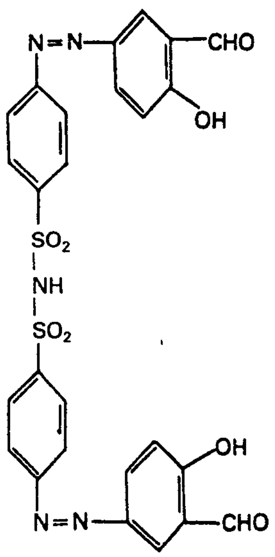 | 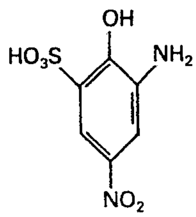 | 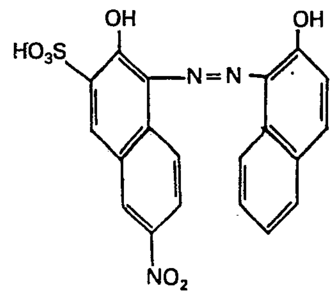 | olivebraun |
| 39 | do. | do. | 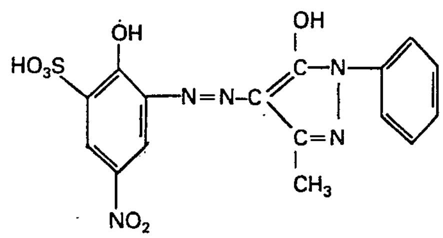 | orange |
| 40 | 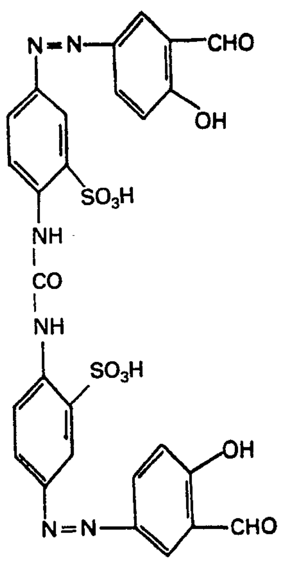 | 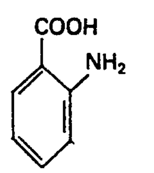 | 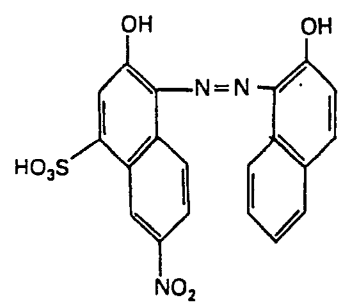 | olive |
| 41 | do. | 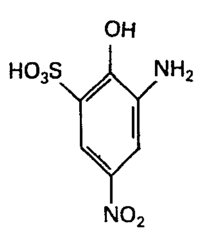 | 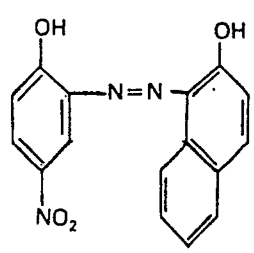 | braun |

| Nr. | I | II | III | IV |
|---|---|---|---|---|
| 42 | 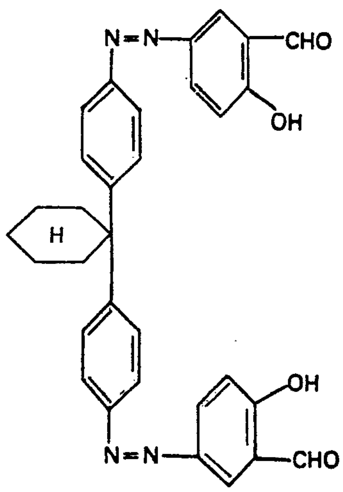 | 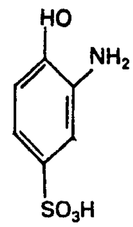 | 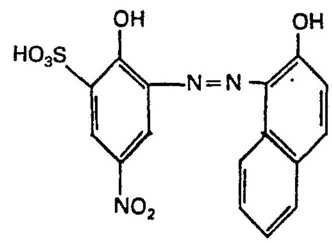 | braun |
| 43 | do. | do. | 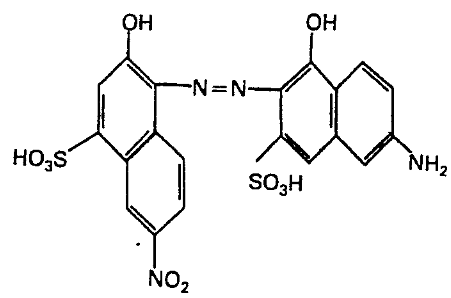 | olive |
| 44 | 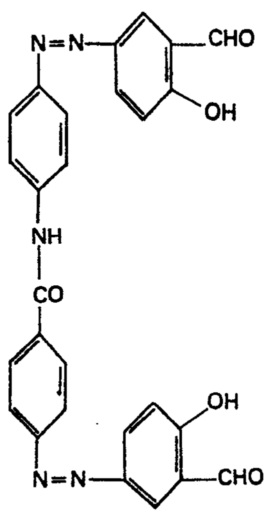 | 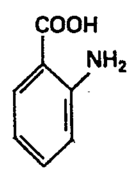 | 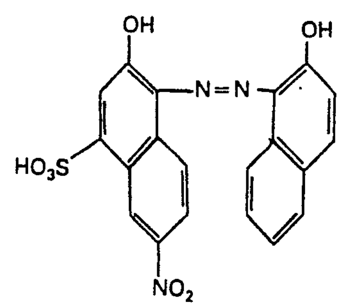 | olive |
| 45 | do. | do. | 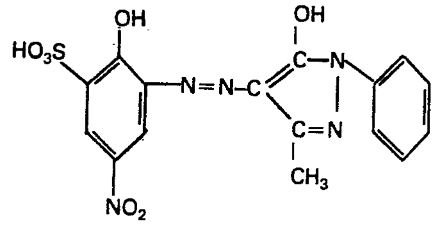 | orange |

| Nr. | I | II | III | IV |
|---|---|---|---|---|
| 46 | 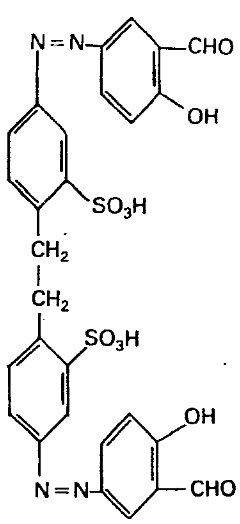 | 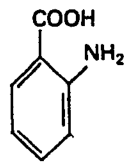 | 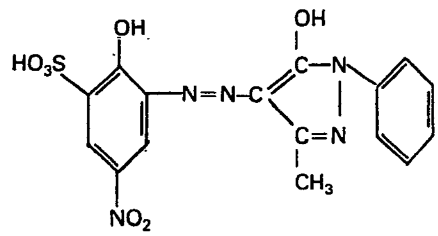 | olive |
| 47 | do. | do. | 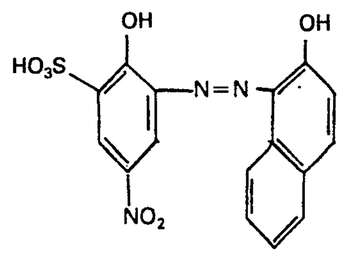 | braun |
| 48 | do. | 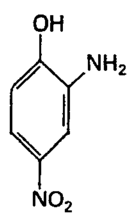 | 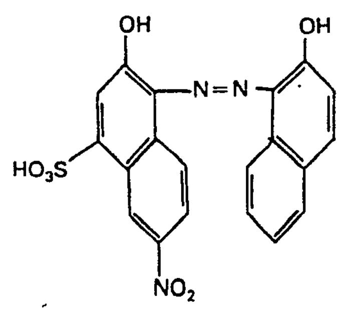 | olivebraun |
| 49 | do. | do. | 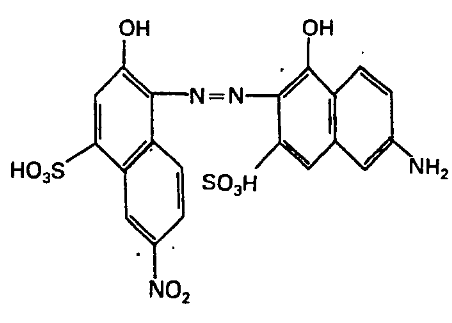 | olive |

| Nr. | I | II | III | IV |
|---|---|---|---|---|
| 50 | 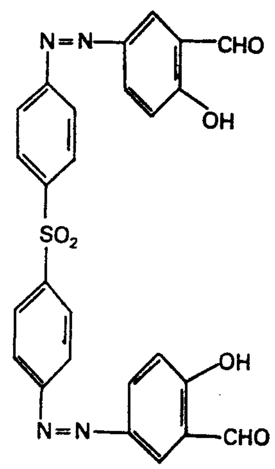 | 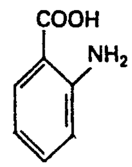 | 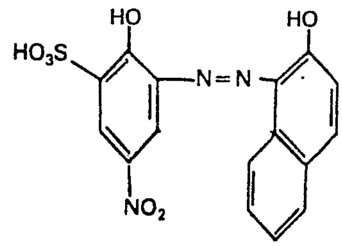 | braun |
| 51 | do. | do. | 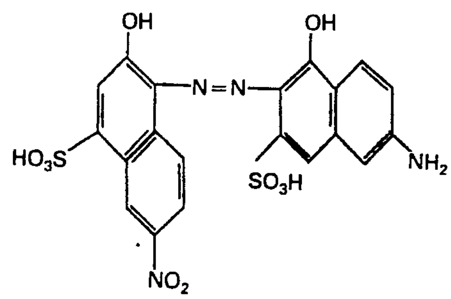 | olive |
| 52 | do. | do. | 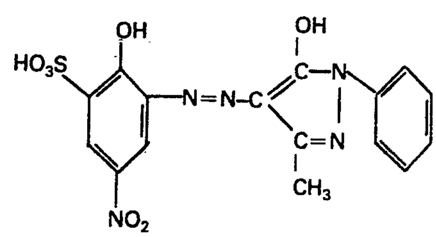 | orange |
| 53 | do. | 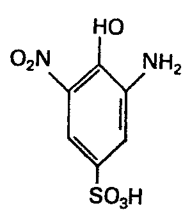 | 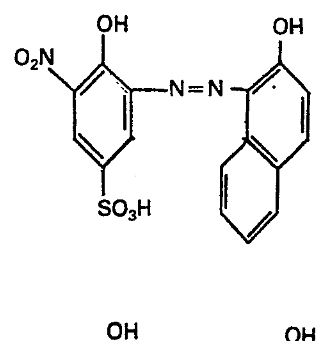 | braun |
| 54 | do. | do. | 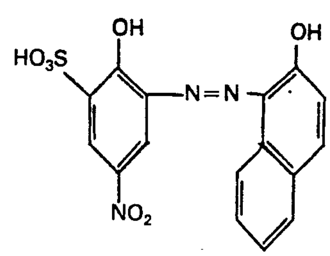 | braun |

| Nr. | I | II | III | IV |
|---|---|---|---|---|
| 55 | 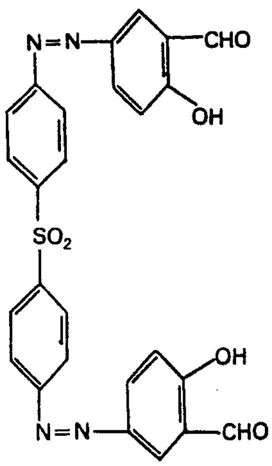 | 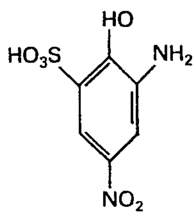 | 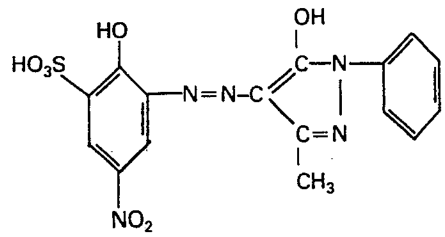 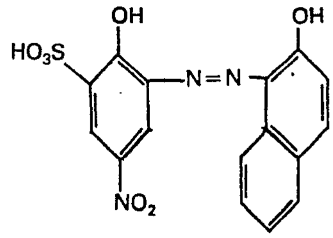 | braun |
| 56 | do. | do. | 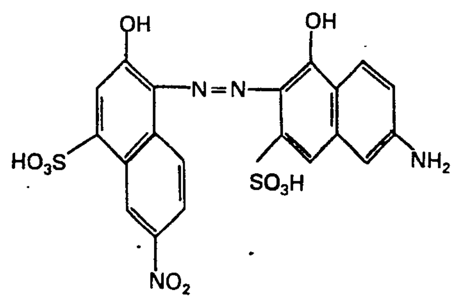 | olive |
| 57 | do. | do. | 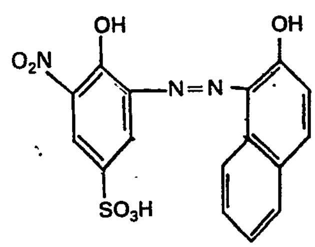 | braun |
| 58 | do. | do. | 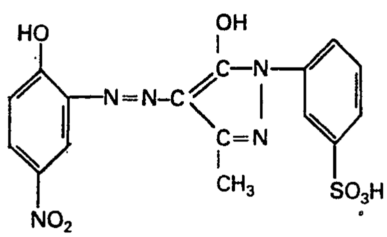 | orange |
| 59 | do. | do. | 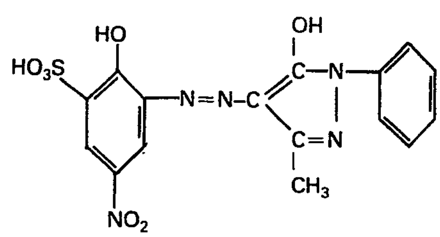 | orange |

| Nr. | I | II | III | IV |
|---|---|---|---|---|
| 60 | 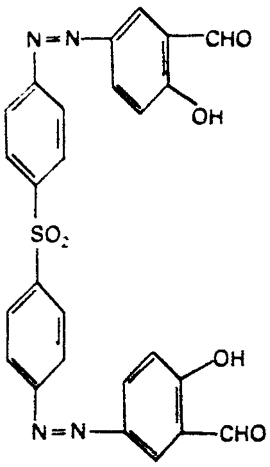 | 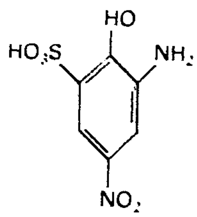 | 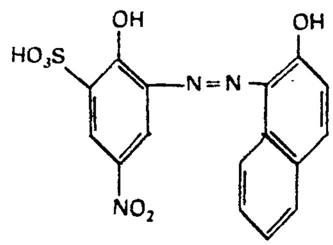 | olivebraun |
| 61 | do. | do. | 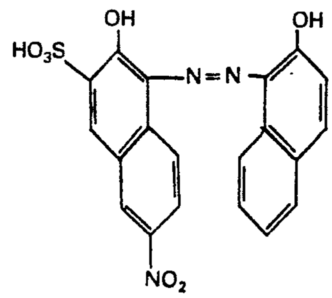 | olivebraun |

Beispiel 5

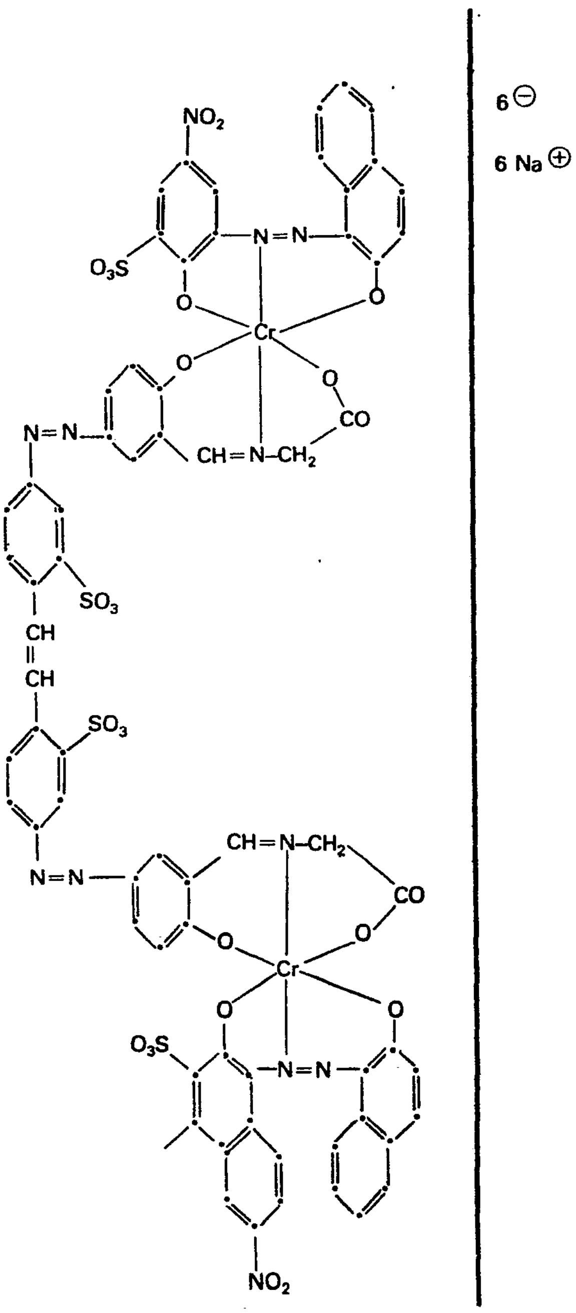

In 850 Volumenteilen Wasser suspendiert man 43,9 Teile der komplexen Chromverbindung vom Typus 1 Atom Chrom: 1 Molekül Farbstoff, welcher 5,2 Teilen Chrom und 38,9 Teilen Monoazofarbstoff aus diazotierter 4-Nitro-2-amino-1-hydroxybenzol-6-sulfonsäure und 2-Hydroxynaphthalin entspricht, mit 7,5 Teilen Glykokoll und 31,8 Teilen des Disazofarbstoffs aus 4,4'-Diaminostilben-2,2'-disulfonsäure und Salicylaldehyd. Man erhitzt das Reaktionsgemisch auf 80 bis 85 ° und erhöht gleichzeitig den pH-Wert der Suspension auf 7 bis 7,5 durch Zugabe von 5n Natronlauge und hält es solange bei dieser Temperatur und konstantem pH-Wert durch Zugabe von 5n Natronlauge, bis die Ausgangsprodukte verschwunden sind.

Der neue, chromhaltige Farbstoff wird durch Zugabe von Natriumchlorid ausgefällt. Hierauf filtriert man ihn ab und wäscht ihn aus mit verdünnter Natriumchlorid-Lösung. Nach dem Trocknen stellt er ein dunkles Pulver dar, das sich in Wasser mit brauner Farbe löst und Leder in braunen Tönen von allgemein guten Echtheiten färbt.

Beispiel 6

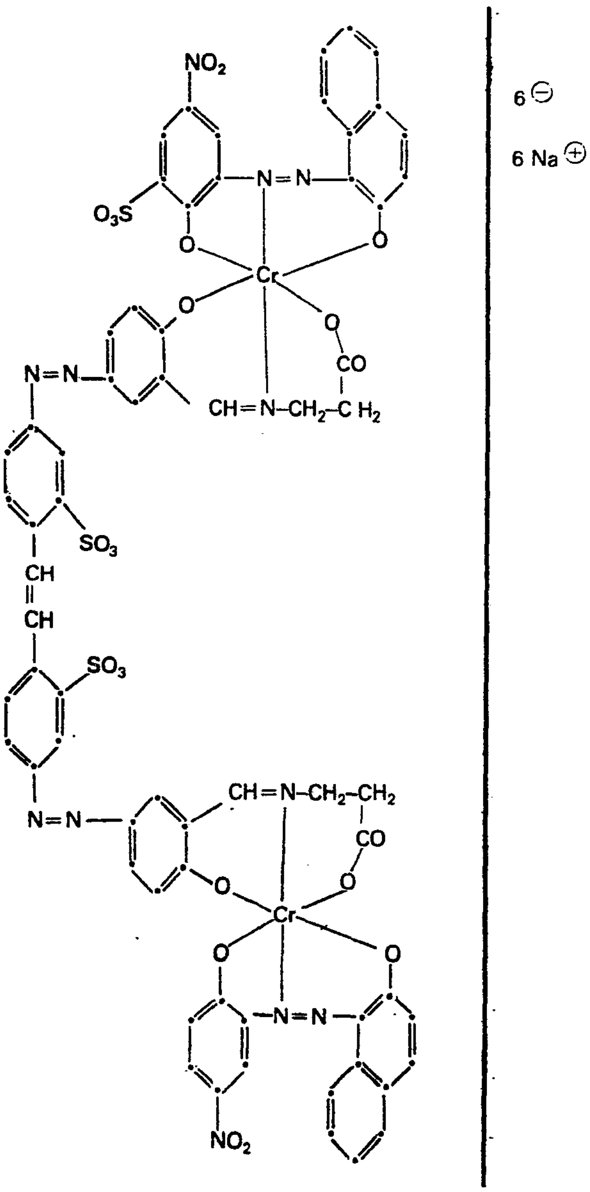

In 850 Volumenteilen Wasser suspendiert man 43,9 Teile der komplexen Chromverbindung vom Typus 1 Atom Chrom: 1 Molekül Farbstoff, welcher 5,2 Teilen Chrom und 38,9 Teilen Monoazofarbstoff aus diazotierter 4-Nitro-2-amino-1-hydroxybenzol-6-sulfonsäure und 2-Hydroxynaphthalin entspricht mit 8,9 Teilen β-Alanin und 31,8 Teilen des Disazofarbstoffs aus 4,4'-Diaminostilben-2,2'-disulfonsäure und Salicylaldehyd. Man erhitzt das Reaktionsgemisch auf 80 bis 85 ° und erhöht gleichzeitig den pH-Wert der Suspension auf 7 bis 7,5 durch Zugabe von 5n Natronlauge und hält es solange bei dieser Temperatur und

konstantem pH-Wert durch Zugabe von 5n Natronlauge, bis die Ausgangsprodukte verschwunden sind.

Der neue, chromhaltige Farbstoff wird durch Zugabe von Natriumchlorid ausgefällt. Hierauf filtriert man ihn ab und wäscht ihn aus mit verdünnter Natriumchloridlösung. Nach dem Trocknen stellt er ein dunkles Pulver dar, das sich in Wasser mit brauner Farbe löst und Leder in braunen Tönen von guten Echtheiten färbt.

Beispiel 7

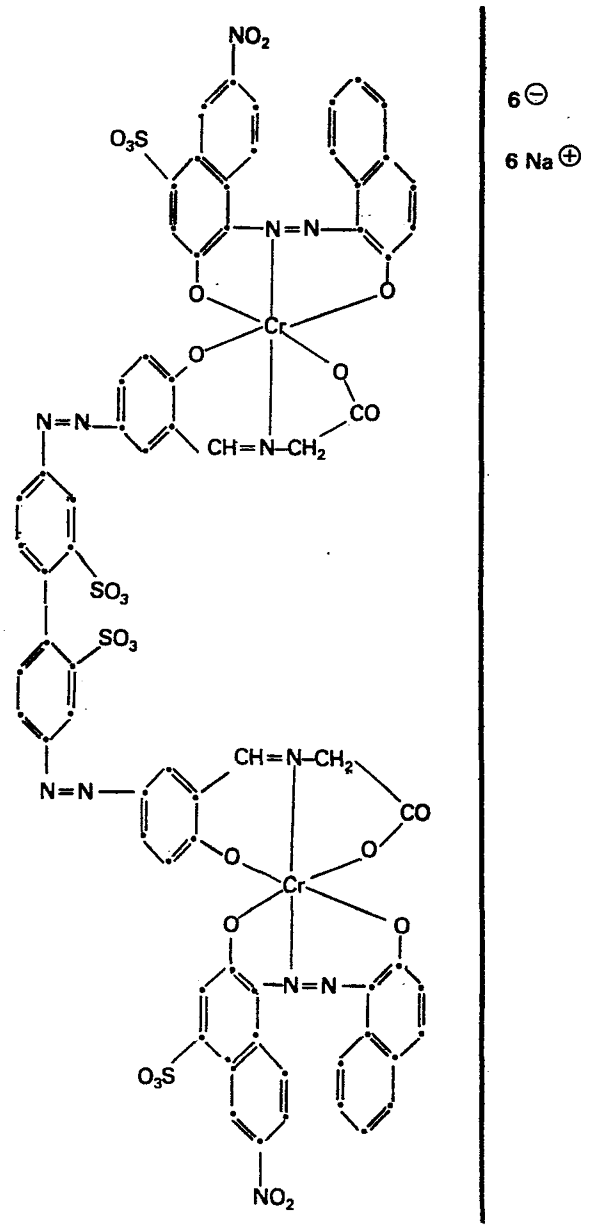

In 850 Volumenteilen Wasser suspendiert man 48,9 Teile der komplexen Chromverbindung vom Typus 1 Atom Chrom: 1 Molekül Farbstoff, welcher 5,2 Teilen Chrom und 43,9 Teilen Monoazofarbstoff aus diazotierter 6-Nitro-1-amino-2-hydroxynaphthalin-4-sulfonsäure und 2-Hydroxynaphthalin entspricht mit 30,5 Teilen Kupplungsprodukt aus diazotierter 4,4'-Diaminodiphenyl-2,2'-disulfonsäure und Salicylaldehyd und 7,5 Teilen Glykokoll. Man erhitzt das Gemisch auf 80 bis 85 ° und erhöht gleichzeitig den pH-Wert der Suspension auf 7 bis 7,5 durch Zugabe von 5 n Natronlauge und hält solange bei dieser Temperatur und konstantem pH-Wert durch weitere Zugabe von 5n Natronlauge, bis die Ausgangsprodukte verschwunden sind. Der neue, chromhaltige Farbstoff wird durch Zugabe von Natriumchlorid ausgefällt; man filtriert ihn ab und trocknet ihn. Nach dem Trocknen stellt er ein dunkles Pulver dar, das sich in Wasser mit oliver Farbe löst und Leder in oliven Tönen färbt.

Weitere Farbstoffe mit ähnlichen Eigenschaften erhält man, wenn man den 1:1-Chromkomplex der in Kolonne III der folgenden Tabelle II angegebenen Verbindung mit den in Kolonne V angegebenen Aminosäuren und den in Kolonne I angegebenen Aldehydkomponenten, wie in den obigen Beispielen angegeben, umsetzt. Diese färben Leder in den in Kolonne IV angegebenen Nuancen.

| Nr. | I | II | III | IV |
|---|---|---|---|---|
| 1 | 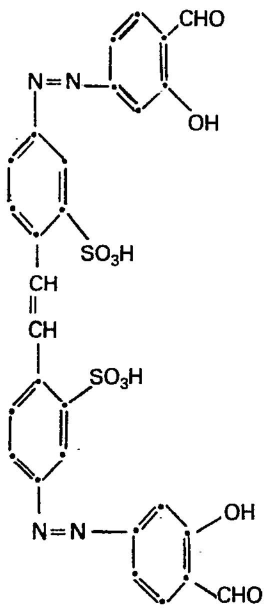 | $COOH$<br>\|<br>$CH_2{-}NH_2$ | 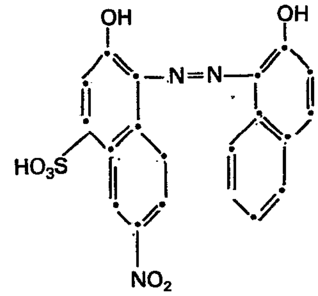 | braun |
| 2 | do. | do. | 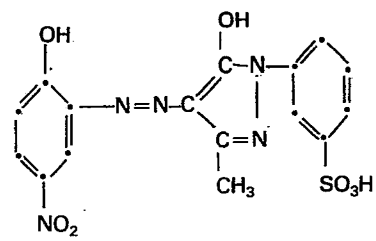 | orange |
| 3 | do. | $COOH$<br>\|<br>$CH{-}NH_2$<br>\|<br>$CH_3$ | do. | orange |
| 4 | do. | $COOH$<br>\|<br>$CH_2{-}NH_2$ | 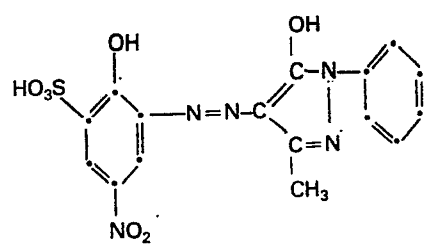 | orange |
| 5 | do. | $COOH$<br>\|<br>$CH{-}NH_2$<br>\|<br>$CH_3$ | do. | orange |
| 6 | do. | $COOH$<br>\|<br>$CH_2{-}NH_2$ | 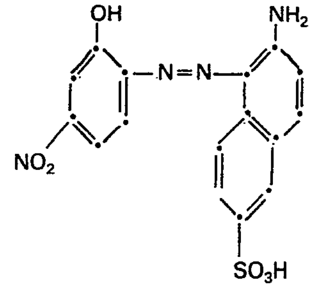 | olive |

| Nr. | I | II | III | IV |
|---|---|---|---|---|
| 7 | 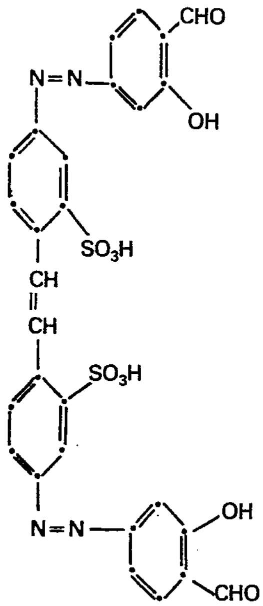 | 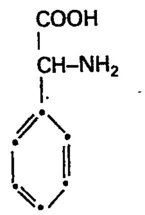 | 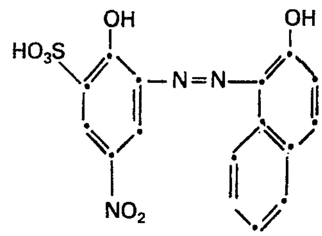 | braun |
| 8 | do. | 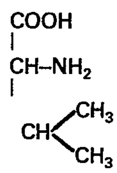 | do. | braun |
| 9 | do. | 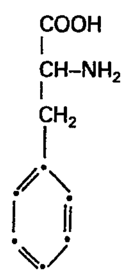 | do. | braun |
| 10 | 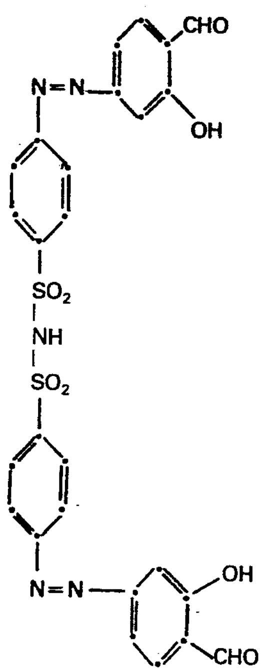 | 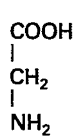 | 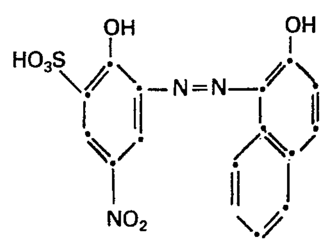 | olivebraun |

| Nr. | I | II | III | IV |
|---|---|---|---|---|
| 11 | 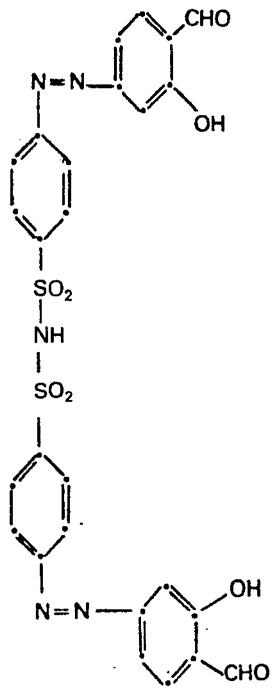 | COOH<br>\|<br>$CH_2$<br>\|<br>$CH_2$–$NH_2$ | 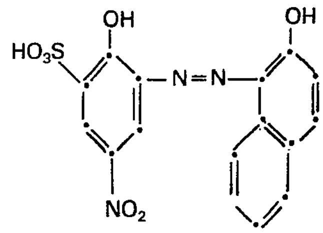 | olivebraun |
| 12 | 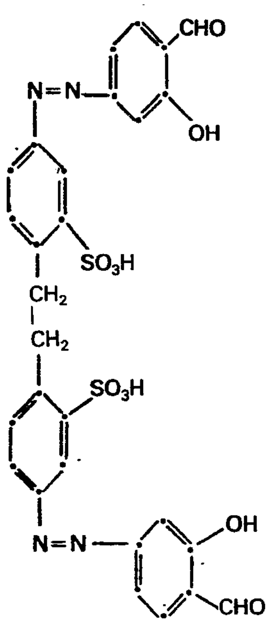 | COOH<br>\|<br>$CH_2$–$NH_2$ | 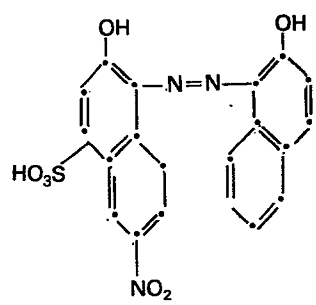 | olive |
| 13 | do. | do. | 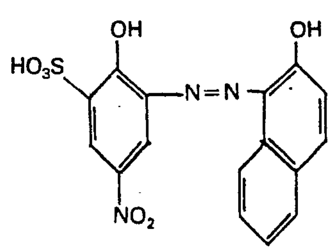 | olive |

| Nr. | I | II | III | IV |
|---|---|---|---|---|
| 14 | 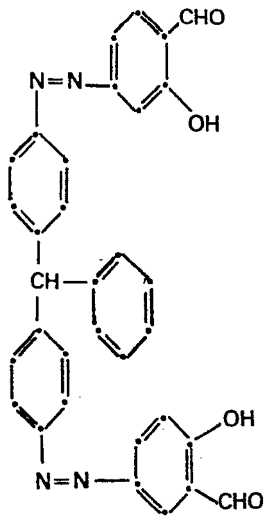 | $COOH$<br>$CH_2-NH_2$ | 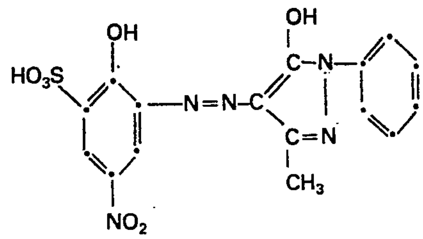 | orange |
| 15 | do. | $COOH$<br>$CH_2$<br>$CH_2-NH_2$ | do. | do. |
| 16 | 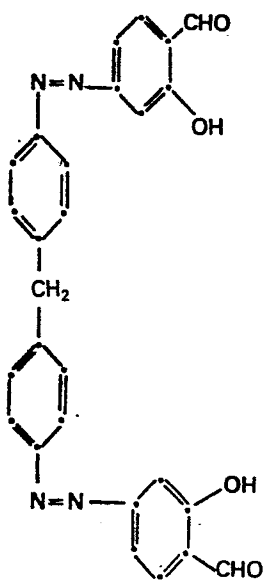 | $COOH$<br>$CH_2-NH_2$ | do. | orange |
| 17 | do. | $COOH$<br>$CH_2$<br>$CH_2-NH_2$ | do. | orange |

| Nr. | I | II | III | IV |
|---|---|---|---|---|
| 18 | 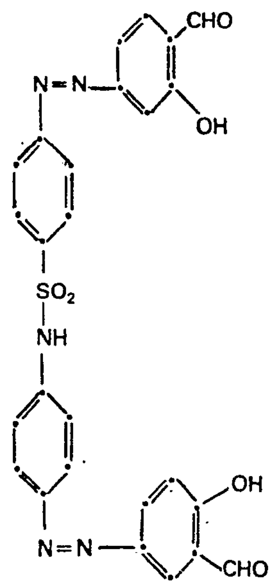 | COOH<br>\|<br>$CH_2-NH_2$ | 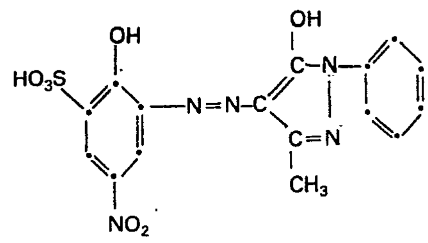 | orange |
| 19 | do. | COOH<br>\|<br>$CH_2$<br>\|<br>$CH_2-NH_2$ | do. | do. |
| 20 | 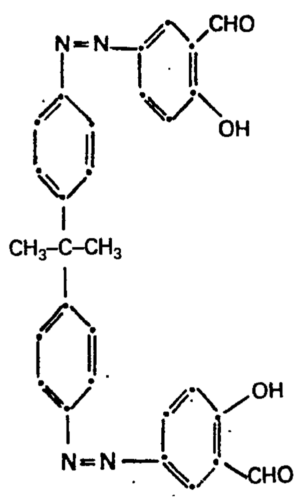 | do. | do. | orange |
| 21 | do. | COOH<br>\|<br>$CH_2$<br>\|<br>$NH_2$ | do. | orange |

| Nr. | I | II | III | IV |
|---|---|---|---|---|
| 22 | 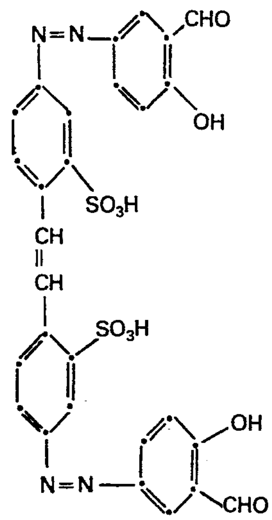 | $COOH$<br>$CH_2-CH_2-NH_2$ | 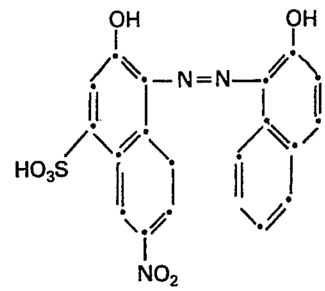 | braun |
| 23 | do. | do. | 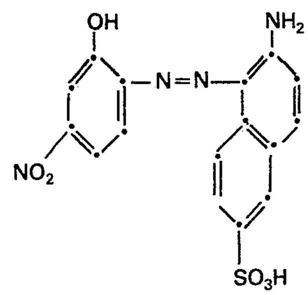 | olive |
| 24 | do. | do. | 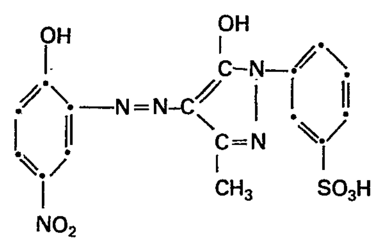 | orange |
| 25 | do. | do. | 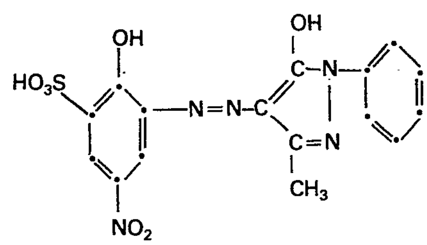 | orange |
| 26 | 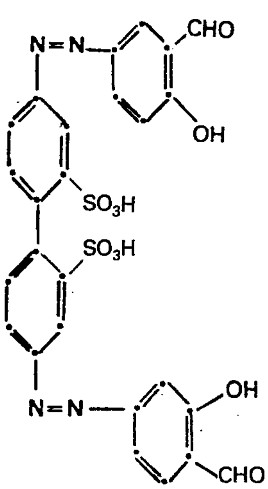 | $COOH$<br>$CH_2$<br>$NH_2$ | 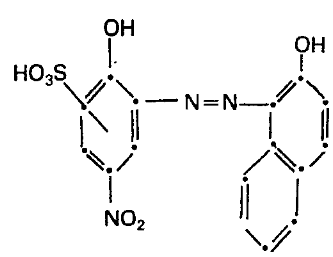 | olive |

| Nr. | I | II | III | IV |
|---|---|---|---|---|
| 27 | 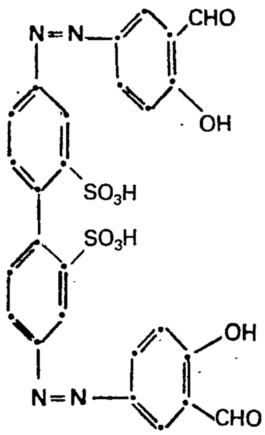 | COOH<br>\|<br>$CH_2-CH_2-NH_2$ | 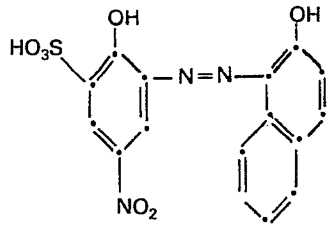 | braun |
| 28 | do. | do. | 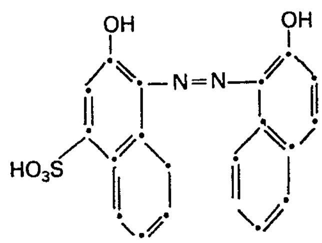 | olive |
| 29 | do. | COOH<br>\|<br>$CH_2-NH_2$ | 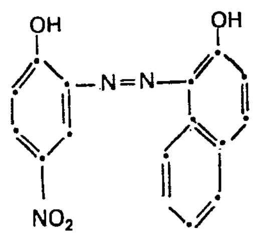 | braun |
| 30 | do. | COOH<br>\|<br>$CH-NH_2$<br>\|<br>$CH_3$ | do. | braun |
| 31 | do. | COOH<br>\|<br>$CH_2-CH_2-NH_2$ | do. | braun |
| 32 | do. | COOH<br>\|<br>$CH_2-NH_2$ | 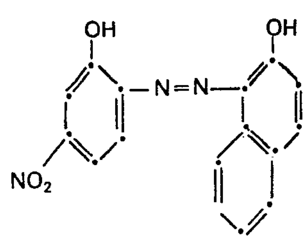 | olivegrün |
| 33 | do. | COOH<br>\|<br>$CH_2-CH_2-NH_2$ | 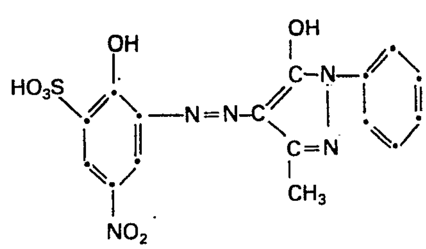 | orange |

| Nr. | I | II | III | IV |
|---|---|---|---|---|
| 34 | 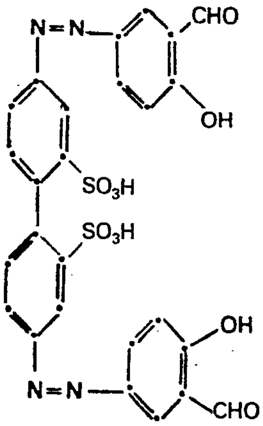 | COOH<br>$CH_2-NH_2$ | 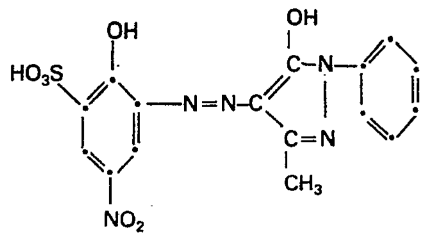 | orange |
| 35 | do. | COOH<br>$CH_2-CH_2-NH_2$ | 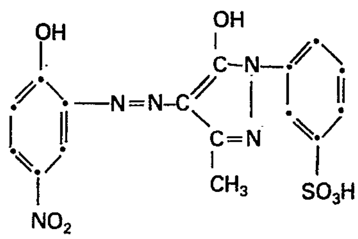 | orange |
| 36 | do. | COOH<br>$CH_2-NH_2$ | do. | orange |
| 37 | 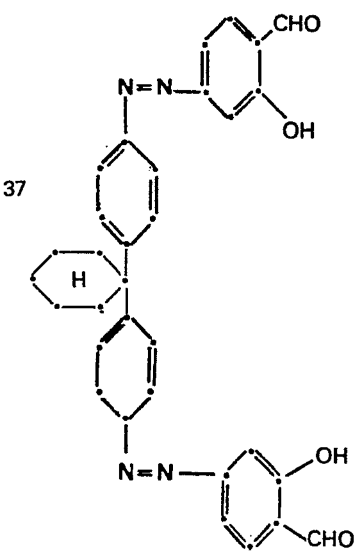 | COOH<br>$CH_2$<br>$NH_2$ | 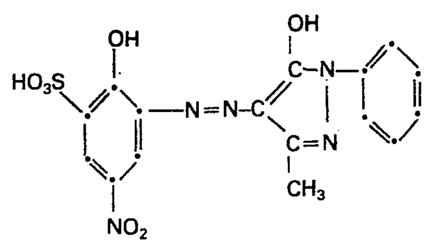 | orange |
| 38 | do. | COOH<br>$CH_2-CH_2-NH_2$ | do. | orange |

| Nr. | I | II | III | IV |
|---|---|---|---|---|
| 39 | 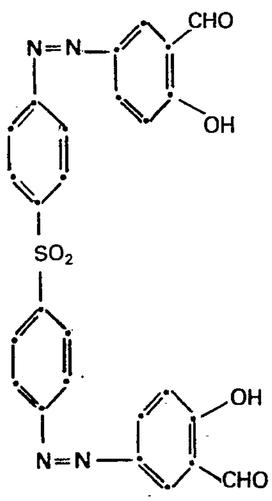 | 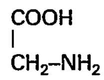 | 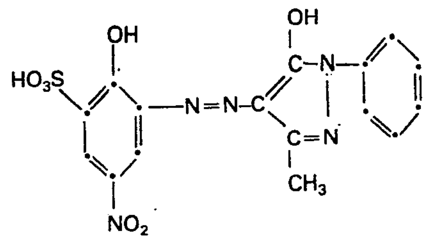 | orange |
| 40 | do. | do. | 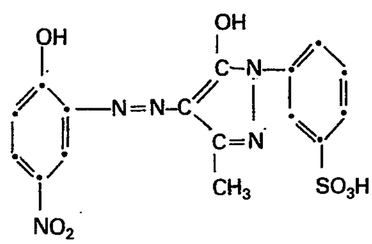 | orange |
| 41 | do. | do. | 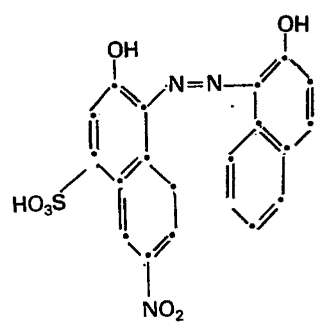 | olivebraun |
| 42 | do. | do. | 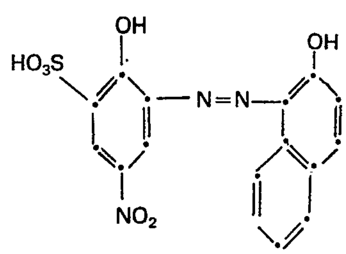 | olivebraun |
| 43 | do. | do. | 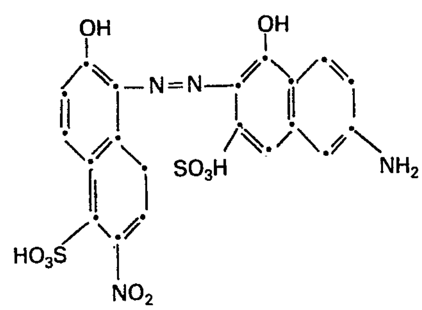 | olive |

| Nr. | I | II | III | IV |
|---|---|---|---|---|
| 44 | 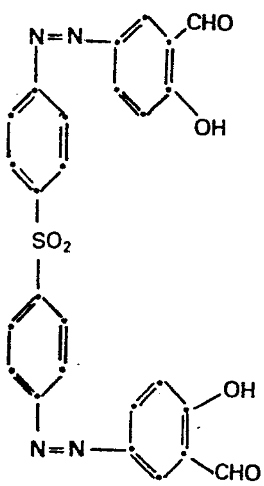 | 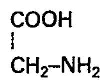 | 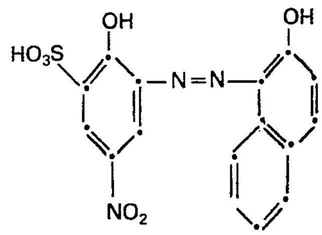 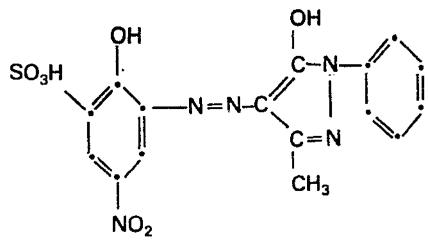 | braun |

**Färbevorschrift für Leder**

100 Teile Bekleidungsveloursleder (Trockengewicht) werden bei 50 ° in einer Lösung von 1000 Volumenteilen Wasser und 2 Teilen Ammoniak 24%ig während 2 Stunden aufgewalkt und anschliessend bei 60 ° in einer Lösung von 1000 Volumteilen Wasser, 2 Teilen Ammoniak 24%ig und 6 Teilen Farbstoff aus Beispiel 7 während 1 Stunde gefärbt. Hierauf gibt man eine Lösung von 40 Volumteilen Wasser und 4 Teilen Ameisensäure 85%ig zu und färbt noch weitere 30 Minuten. Dann werden die Leder gut gespült und gegebenenfalls noch mit 2 Teilen eines Dicyandiamidformaldehyd-Kondensationsproduktes während 30 Minuten bei 50 ° behandelt.

In gleicher Weise lassen sich andere Verloursleder sowie Handschuhleder färben.

Die so erhaltenen oliven Färbungen zeichnen sich durch gute Echtheiten und gute Deckvermögen aus.

In gleicher Weise erhält man, wenn man den Farbstoff aus Beispiel 2 verwendet, eine echte braune Färbung.

**Patentansprüche**

1. Chromkomplexverbindungen, die in Form der freien Säure der Formel

(1)

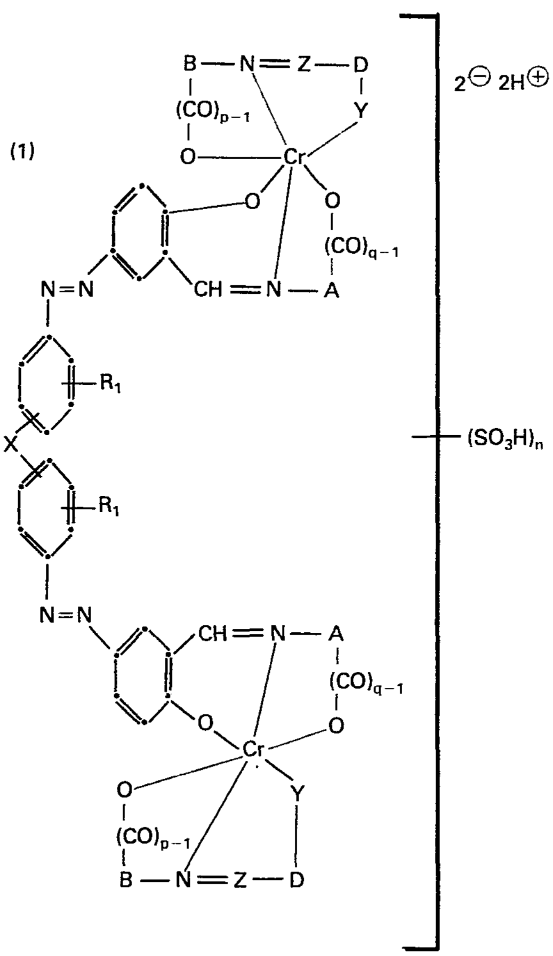

entsprechen, worin X eine direkte Bindung oder ein Brückenglied, Z unabhängig voneinander ein

Stickstoffatom oder eine CH-Gruppe, p und q unabhängig voneinander 1 oder 2, Y unabhängig voneinander ein Sauerstoffatom oder eine Gruppe der Formel –NR–, worin R Wasserstoff oder $C_1$–$C_5$ Alkyl bedeutet, wobei, wenn Z eine CH-Gruppe ist, Y ein Sauerstoffatom sein muss, $R_1$ unabhängig voneinander je Wasserstoff oder einen Substituenten, B unabhängig voneinander je einen Benzol- oder Naphthalinrest, D unabhängig voneinander den Rest eines o-Hydroxy-aldehyds, wenn Z die –CH-Gruppe bedeutet, oder, wenn Z ein Stickstoffatom ist, den Rest einer in o-Stellung zu Y kuppelnden Kupplungskomponente oder eines Acetessigsäureamids, A unabhängig voneinander je einen Benzol- oder Naphthalinrest oder einen gegebenenfalls substituierten aliphatischen oder cycloaliphatischen Rest und n eine ganze Zahl von 2 bis 8 bedeutet, wobei, wenn A ein aliphatischer oder cycloaliphatischer Rest ist, q = 2 sein muss.

2. Chromkomplexverbindungen gemäss Anspruch 1 der Formel (1), worin D–Y der Rest eines Phenols, Naphthols, eines Naphthylamins, Pyrazolons, eines Pyrazolimins, eines Pyridons oder eines Acetessigsäureamids ist.

3. Chromkomplexverbindungen gemäss Anspruch 1 der Formel (1), worin X eine direkte Bindung, eine gegebenenfalls substituierte Methylenbrücke oder eine Brücke der Formel –O–, –S–, –NR'–, –SO–, $-SO_2-$, –CO–, –CO–CO–, –CO–NH–, –NH–CO–NH–, –NH–CS–NH–, $-SO_2-NH-$, $-SO_2-NH-SO_2-$, –N=N–, $-CH_2-CH_2-$ oder –CH=CH– ist, wobei R' Wasserstoff oder $C_1$–$C_5$ Alkyl bedeutet.

4. Chromkomplexverbindungen gemäss Anspruch 1 der Formel (1), worin Y ein Sauerstoffatom oder die –NH-Gruppe und Z ein Stickstoffatom bedeutet.

5. Chromkomplexverbindungen gemäss den Ansprüchen 1 bis 4, die in Form der freien Säure der Formel

(2)

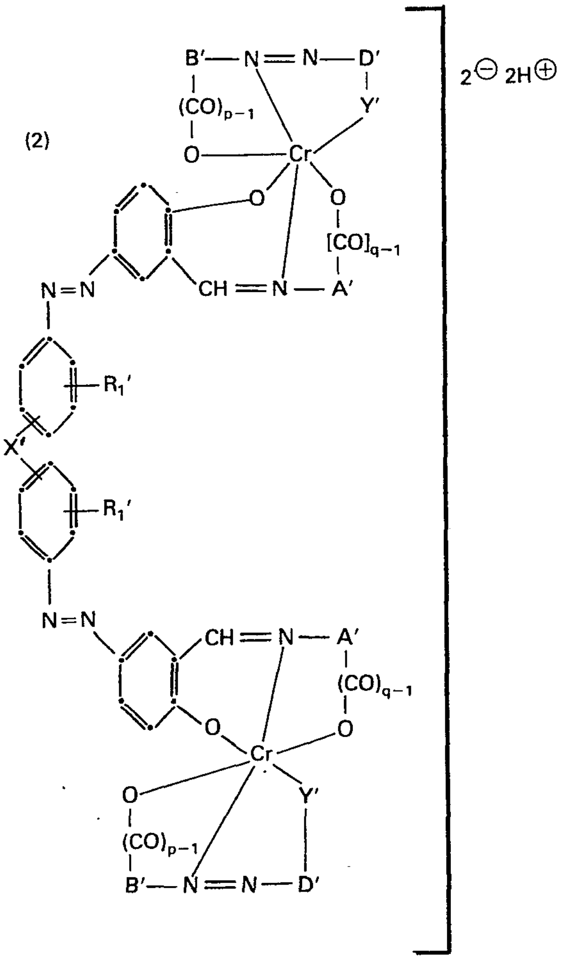

entsprechen, worin X' eine direkte Bindung oder eine Brücke der Formel

$CH_2$–, 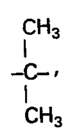, 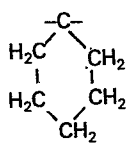, –CH=CH–, $-SO_2-$, –N=N–, –O–,

oder $-SO_2-NH-SO_2$, Y' unabhängig voneinander ein Sauerstoffatom oder die –NH-Gruppe, $R_1'$ unabhängig voneinander je Wasserstoff, die Sulfogruppe, Chlor, Methyl oder Methoxy, p 1 oder 2, q 1 oder 2, B' unabhängig voneinander je ein gegebenenfalls mit Sulfo-, $C_1$–$C_5$ Alkyl- oder $C_1$–$C_5$ Alkoxygruppen, Chlor, Brom, Nitro oder Cyano substituierter Phenyl- oder Naphthylrest, D' unabhängig voneinander ein gegebenenfalls mit Hydroxy, $C_1$–$C_5$ Alkyl oder $C_1$–$C_5$ Alkoxy substituierter Phenylrest, ein gegebenenfalls mit Chlor, niedrigmolekulares Alkanoylamino, Alkylsulfonylamino oder Alkoxycarbonylamino, ferner Aroylamino oder Arylsulfonylamino, Sulfo oder Amino und Sulfo substituierter Naphthylrest, der Rest eines 1-Aryl-3-methylpyrazol-5-ons oder der Rest eines im Anilidkern gegebenenfalls mit Sulfo, Nitro, Chlor, Brom, $C_1$–$C_5$ Alkyl oder $C_1$–$C_5$ Alkoxy substituierten Acetessigsäureanilids ist und worin A', unabhängig voneinander, für den Fall, dass q = 1 ist, eine der bei B' angegebenen Bedeutungen hat und für den Fall, dass q = 2 ist, je eine gegebenenfalls substituierte Alkylengruppe bedeutet, wobei die Anzahl der Sulfogruppen 2 bis 8 sein muss, wobei «niedrigmolekular» Reste mit bis zu 5 Kohlenstoffatomen bezeichnet.

6. Chromkomplexverbindungen gemäss Anspruch 5, worin X' eine direkte Bindung oder ein Brückenglied der Formel $-SO_2-$, $-CH_2-$, –CH=CH– oder –O– ist, das die beiden Benzolkerne in p-Stellung zu den Azogruppen verknüpft.

7. Chromkomplexverbindungen gemäss Anspruch 5, worin die Reste $R_1'$ Wasserstoff oder eine Sulfogruppe bedeuten.

8. Chromkomplexverbindungen gemäss Anspruch 5, worin B' mit Nitro oder Sulfo oder Nitro

und Sulfo substituiertes Phenyl oder Naphthyl bedeutet.

9. Chromkomplexverbindungen gemäss Anspruch 5, worin D' ein gegebenenfalls mit Sulfo oder Amino und Sulfo substituierter Naphthylrest oder ein gegebenenfalls mit $C_1$–$C_5$ Alkyl substituierter Phenylrest ist.

10. Chromkomplexverbindungen gemäss Anspruch 5, worin q = 2 ist und A' eine Methylen-, Äthylen- oder Äthylidengruppe bedeutet.

11. Chromkomplexverbindungen gemäss Anspruch 5, worin q = 1 ist und A' einen mit Nitro oder Sulfo oder Nitro und Sulfo substituierten Phenylrest bedeutet.

12. Chromkomplexverbindungen gemäss den Ansprüchen 1 bis 11, welche 2 bis 6 Sulfogruppen enthalten.

13. Verfahren zur Herstellung von Chromkomplexverbindungen gemäss Anspruch 1, dadurch gekennzeichnet, dass man eine Verbindung der Formel

(3) 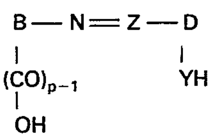 oder

(4) 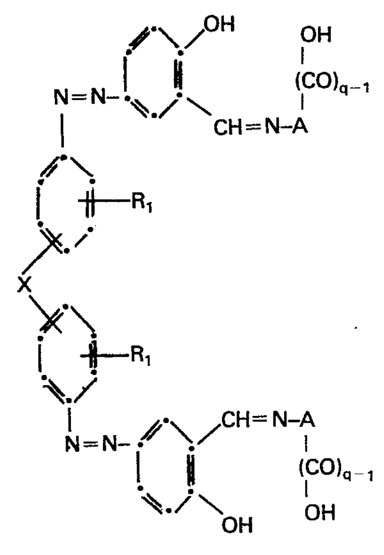

worin $R_1$, X, Y, Z, A, B, D und p und q dasselbe wie in Formel (1) bedeuten, mit einem chromabgebenden Mittel zum 1:1-Chromkomplex, bzw. im Falle der Formel (4) zum 2 Atome Chrom pro Molekül enthaltenden Chromkomplex umsetzt und diesen anschliessend mit der nicht metallisierten Verbindung der Formel (4) oder (3) umsetzt, wobei man die Ausgangsverbindungen so wählt, dass der Chromkomplex 2 bis 8 Sulfogruppen enthält, oder dass man eine Verbindung der Formel (3) in den 1:1-Chromkomplex überführt und diesen mit einem Gemisch eines Dialdehyds der Formel

5 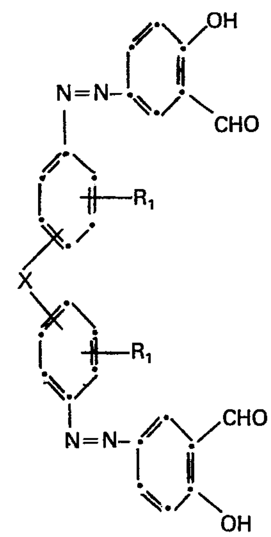

und 2 Äquivalenten eines Amins oder einer Aminosäure der Formel

(6) $HO-(CO)_{q-1}-A-NH_2$

worin X, $R_1$, A und q dasselbe wie in Formel (1) bedeuten, umsetzt.

14. Verfahren gemäss Anspruch 13, dadurch gekennzeichnet, dass man den 1:1-Chromkomplex einer Verbindung der Formel (3) verwendet, worin –D–YH der Rest eines Phenols, Naphthols, eines Naphthylamins, Pyrazolons, eines Pyrazolimins, eines Pyridons oder eines Acetessigsäureamids ist.

15. Verfahren gemäss Anspruch 13, dadurch gekennzeichnet, dass man ein Bisazomethin der Formel (4) bzw. einen Dialdehyd der Formel (5) verwendet, worin X eine direkte Bindung, eine gegebenenfalls substituierte Methylenbrücke oder eine Brücke der Formel –O–, –S–, –NR'–, –SO–, $-SO_2-$, –CO–, –CO–CO–, –CO–NH–, –NH–CO–NH–, –NH–CS–NH–, $-SO_2-NH-$, $-SO_2-NH-SO_2-$, –N=N–, $-CH_2-CH_2-$ oder –CH=CH– ist, wobei R' Wasserstoff oder $C_1$–$C_5$ Alkyl bedeutet.

16. Verfahren gemäss Anspruch 13, dadurch gekennzeichnet, dass man von einer Verbindung der Formel (3) ausgeht, worin Y ein Sauerstoffatom oder die –NH-Gruppe und Z ein Stickstoffatom bedeutet.

17. Verfahren gemäss den Ansprüchen 13 bis 16 zur Herstellung von Chromkomplexverbindungen gemäss Anspruch 5, dadurch gekennzeichnet, dass man 2 Äquivalente eines 1:1-Chromkomplexes einer Verbindung der Formel

(10) 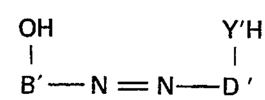

mit einem Äquivalent eines Bisazomethins der Formel

(11) 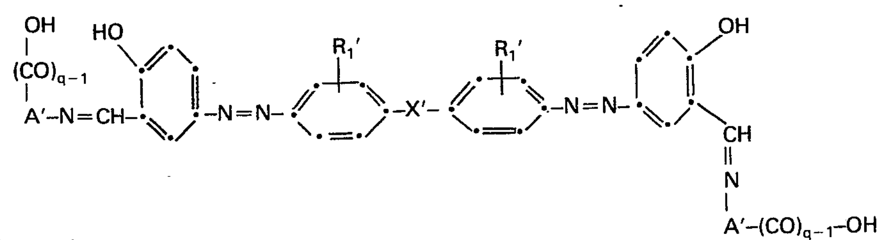

bzw. einem Äquivalent eines Dialdehyds der Formel

(12) 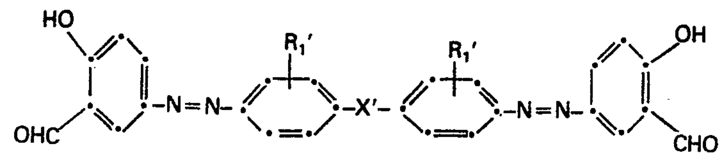

und 2 Äquivalenten eines Amins bzw. einer Aminosäure der Formel

(13) $HO-(CO)_{q-1}-A'-NH_2$

umsetzt, worin X', Y', $R_1$, q, p, A', B' und D' dasselbe wie bei Formel (2) bedeuten.

18. Verfahren gemäss Anspruch 17, dadurch gekennzeichnet, dass man von einer Verbindung der Formel (11) bzw. (12) ausgeht, worin X' eine direkte Bindung oder ein Brückenglied der Formel $-SO_2-$, $-CH_2-$, $-CH=CH-$ oder $-O-$ ist, das die beiden Benzolkerne in p-Stellung zu den Azogruppen verknüpft.

19. Verfahren gemäss Anspruch 17, dadurch gekennzeichnet, dass man von einer Verbindung der Formel (11) bzw. (12) ausgeht, worin die Reste $R_1'$ Wasserstoff oder eine Sulfogruppe bedeuten.

20. Verfahren gemäss Anspruch 17, dadurch gekennzeichnet, dass man von einer Verbindung der Formel (10) ausgeht, worin B' mit Nitro oder Sulfo oder Nitro und Sulfo substituiertes Phenyl oder Naphthyl ist.

21. Verfahren gemäss Anspruch 17, dadurch gekennzeichnet, dass man von einer Verbindung der Formel (10) ausgeht, worin D' ein gegebenenfalls mit Sulfo oder Amino und Sulfo substituierter Naphthylrest oder ein gegebenenfalls mit $C_1-C_5$ Alkyl substituierter Phenylrest ist.

22. Verfahren gemäss Anspruch 17, dadurch gekennzeichnet, dass man von einer Verbindung der Formel (11) bzw. (12) ausgeht, worin A' eine Methylen-, Äthylen- oder Äthylidengruppe bedeutet, und q = 2 ist.

23. Verfahren gemäss Anspruch 17, dadurch gekennzeichnet, dass man von einer Verbindung der Formel (11) bzw. (12) ausgeht, worin A' einen mit Nitro oder Sulfo oder Nitro und Sulfo substituierten Phenylrest bedeutet und q=1 ist.

24. Verfahren gemäss den Ansprüchen 13 bis 23, dadurch gekennzeichnet, dass man die Ausgangsverbindungen so wählt, dass der Chromkomplexfarbstoff 2 bis 6 Sulfogruppen enthält.

25. Verfahren zum Färben und Bedrucken von Leder unter Verwendung der gemäss den Ansprüchen 1 bis 12 definierten, bzw. gemäss den Ansprüchen 13 bis 24 erhaltenen Farbstoffe.

**Revendications**

1. Composés complexes de chrome correspondant, sous la forme d'acide libre, à la formule

(1) 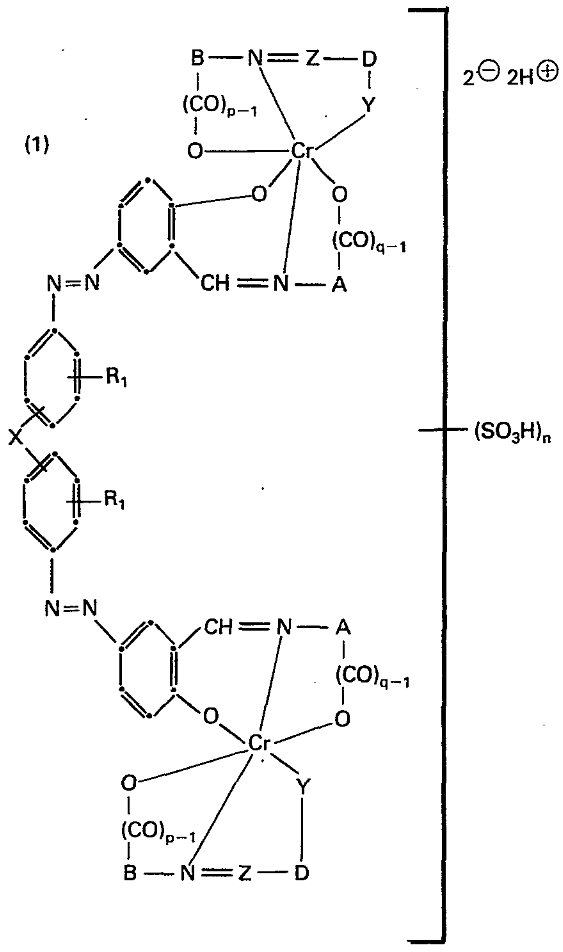

où X représente une liaison directe ou un terme pontal, chaque Z représente, indépendamment de l'autre, un atome d'azote ou un groupe –CH, p et q représentent, indépendamment l'un de l'autre, 1 ou 2, chaque Y représente, indépendamment de l'autre, un atome d'oxygène ou bien un groupe de formule –NR–, où R représente de l'hydrogène ou un alcoyle $C_1-C_5$, Y devant être un atome d'oxygène lorsque Z représente un groupe –CH, chaque $R_1$ représente, indépendamment de l'autre, de l'hydrogène ou bien un substituant, chaque B représente, indépendamment de l'autre, un résidu benzène ou naphtalène, chaque D représente, indépendamment de l'autre, le résidu d'un o-hydroxyaldéhyde lorsque Z représente le groupe –CH, ou bien, lorsque Z représente un atome d'azote, le résidu d'un constituant de couplage se couplant en position o par rapport à Y, ou le résidu d'un amide acétylacétique; chaque A représente, indépendamment de l'autre, un résidu benzène ou naphthalène ou bien un résidu aliphatique ou cycloaliphatique éventuellement substitué et n représente un nombre entier de 2 à 8, q devant être égal à 2 lorsque A représente un résidu aliphatique ou cycloaliphatique.

2. Composés complexes de chrome de formule (1) selon la revendication 1, où D–Y représente le résidu d'un phénol, d'un naphtol, d'une naphtylamine, d'une pyrazolone, d'une pyrazolimine, d'une pyridone ou d'un amide acétylacétique.

3. Composés complexes de chrome de formule (1), selon la revendication 1, où X représente une liaison directe, un pont méthylène éventuellement substitué ou bien un pont de formule –O–, –S–, –NR'–, –SO–, $-SO_2-$, –CO–, –CO–CO–, –CO–NH–, –NH–CO–NH–, –NH–CS–NH–, $-SO_2NH$, $-SO_2-NH-SO_2-$, –N=N–, $-CH_2-CH_2-$ ou –CH=CH–, R' représentant de l'hydrogène ou bien un alcoyle $C_1$–$C_5$.

4. Composés complexes de chrome de formule (4) selon la revendication 1, où Y représente un atome d'oxygène ou bien le groupe –NH– et Z représente un atome d'azote.

5. Composés complexes du chrome selon l'une quelconque des revendications 1 à 4, correspondant, sous la forme de l'acide libre, à la formule

(2)

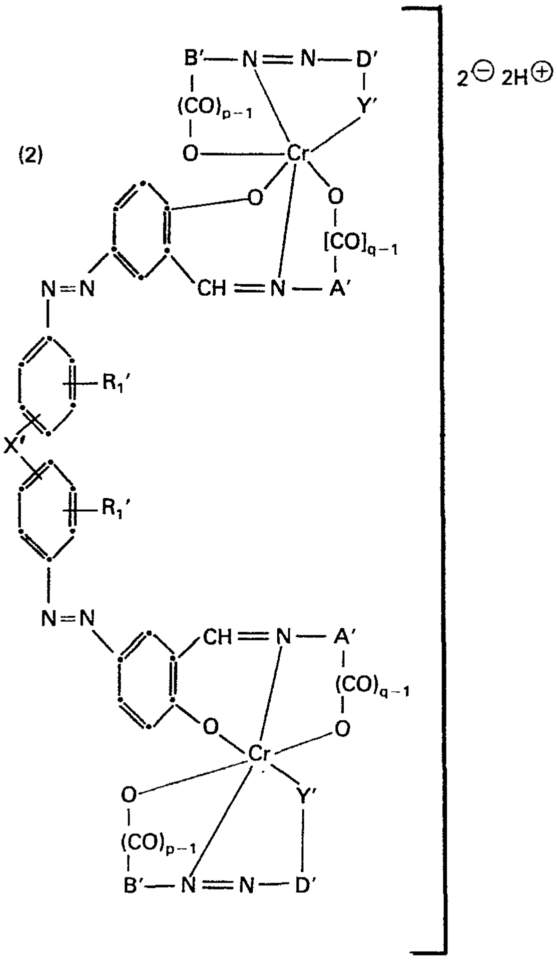

où X', représente une liaison directe ou bien un pont de formule

$CH_2-$, 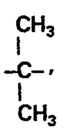, 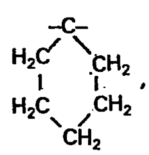, –CH=CH–, $-SO_2-$, –N=N–, –O–,

ou bien $-SO_2-NH-SO_2$, chaque Y' représente, indépendamment de l'autre, un atome d'oxygène ou bien le grupe –NH–, chaque $R_1$' représente, indépendamment de l'autre, de l'hydrogène, un groupe sulfo, chloro, méthyle ou méthoxy, p vaut 1 ou 2, q vaut 1 ou 2, chaque B' représente, indépendamment de l'autre, un résidu phényle ou naphtyle, éventuellement substitué par des groupes sulfo, alcoyle $C_1$–$C_5$ ou alcoxy $C_1$–$C_5$, chloro, bromo, nitro ou cyano, chaque D' représente, indépendamment de l'autre, un résidu phényle, éventuellement substitué par un hydroxy, un alcoyle $C_1$–$C_5$ ou un alcoxy $C_1$–$C_5$, un résidu naphtyle éventuellement substitué par un groupe chloro, alcanoylamino, alcoylsulfonylamino ou alcoxycarbonylamino de poids moléculaire peu élevé, ou bien aroylamino ou arylsulfonylamino, sulfo ou bien amino et sulfo; le résidu d'une 1-aryl-3-méthylpyrazol-5-one ou le résidu d'un anilide acétylacétique éventuellement substitué dans le noyau anilide par un groupe sulfo, nitro, chloro, bromo, alcoyle $C_1$–$C_5$ ou alcoxy $C_1$–$C_5$ et où chaque A' représente, indépendamment de l'autre, dans le cas où q = 1, l'une des significations données pour B' et, dans le cas où q = 2, un groupe alcoylène éventuellement substitué, le nombre des groupes sulfo devant être de 2 à 8, les résidus «de poids moléculaire peu élevé» représentant des résidus comportant jusqu'à 5 atomes de carbone.

6. Composés complexes de chrome selon la revendication 5, où X' représente une liaison directe ou un terme pontal de formule $-SO_2-$, $-CH_2-$, CH=CH– ou –O–, qui relie les deux noyaux benzéniques en position p par rapport aux groupes azo.

7. Composés complexes de chrome selon la revendication 5 où les résidus $R_1'$ représentent de l'hydrogène ou bien un groupe sulfo.

8. Composés complexes du chrome, selon la revendication 5 où B' représente un phényle ou un naphtyle substitué par un groupe nitro ou sulfo ou bien nitro et sulfo.

9. Composés complexes du chrome selon la revendication 5, où D' représente un résidu naphtyle éventuellement substitué par un groupe sulfo ou amino et sulfo ou bien un résidu phényle éventuellement substitué par un alcoyle $C_1$–$C_5$.

10. Composés complexes du chrome selon la revendication 5 où q = 2 et A' représente un groupe méthylène, éthylène ou éthylidène.

11. Composés complexes du chrome selon la revendication 5, où q = 1 et A' représente un résidu phényle substitué par un groupe nitro ou sulfo ou bien nitro et sulfo.

12. Composés complexes du chrome selon l'une quelconque des revendications 1 à 11, comportant de 2 à 6 groupes sulfo.

13. Procédé pour préparer des composés complexes de chrome selon la revendication 1, caractérisé en ce qu'on transforme un composé de formule

(3) 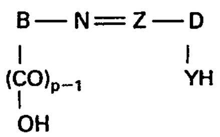

ou

(4) 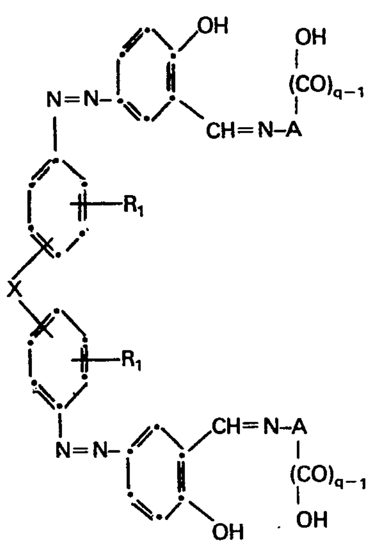

où $R_1$, X, Y, Z, A, B, D et p et q ont la même signification que dans la formule (1), en un complexe du chrome 1:1, à l'aide d'un agent qui cède du chrome, ou bien, dans le cas de la formule (4), en un complexe du chrome qui renferme 2 atomes de chrome par molécule, et en ce qu'on fait ensuite réagir celuici avec le composé non métallisé de formule (4) ou (3), les produits de départ étant choisis de façon à ce que le complexe de chrome comporte 2 à 8 groupes sulfo, ou bien en ce qu'on transforme un composé de formule (3) en complexe de chrome 1:1 et en ce qu'on fait réagir celui-ci avec un mélange constitué d'un dialdéhyde de formule

5 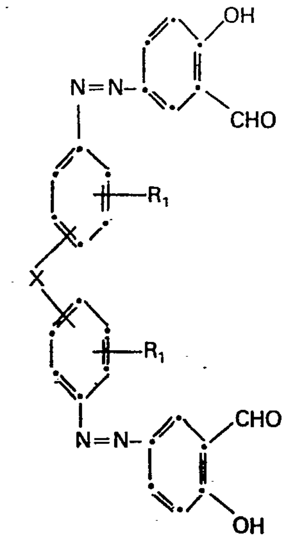

et 2 équivalents d'une amine ou d'un amino-acide de formule

(6) $HO-(CO)_{q-1}-A-NH_2$

où X, $R_1$, A et q ont la même signification que dans la formule (1).

14. Procédé selon la revendication 13, caractérisé en ce qu'on utilise le complexe de chrome 1:1 d'un composé de formule (3), où –D–YH représente le résidu d'un phénol, d'un naphtol, d'une naphtylamine, d'une pyrazolone, d'une pyrazolimine, d'une pyridone ou d'un amide acétylacétique.

15. Procédé selon la revendication 13, caractérisé en ce qu'on utilise une bisazométhine de formule (4), respectivement un dialdéhyde de formule (5), où X représente une liaison directe, un pont méthylène éventuellement substitué ou bien un pont de formule –O–, –S–, –NR'–, –SO–, $-SO_2-$, –CO–, –CO–CO–, –CO–NH–, –NH–CO–NH–, –NH–CS–NH–, $-SO_2-NH-$, $-SO_2-NH-SO_2-$, –N=N–, $-CH_2-CH_2-$ ou –CH=CH–, R' représentant de l'hydrogène ou un alcoyle $C_1$–$C_5$.

16. Procédé selon la revendication 13, caractérisé en ce qu'on part d'un composé de formule (3), où Y représente un atome d'oxygène ou le groupe –NH et Z représente un atome d'azote.

17. Procédé selon l'une quelconque des revendications 13 à 16, pour préparer des composés complexes de chrome selon la revendication 5, caractérisé en ce que'on fait réagir 2 équivalents d'un complexe de chrome 1:1 d'un composé de formule

(10) 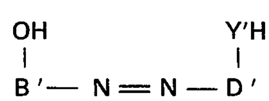

avec un équivalent d'une bisazométhine de formule

(11) 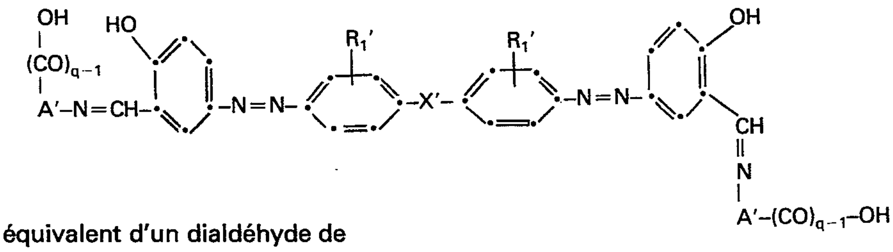

respectivement un équivalent d'un dialdéhyde de formule

(12) 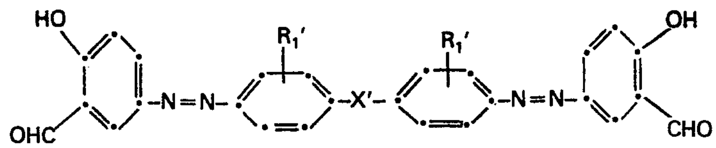

et avec 2 équivalents d'une amine, respectivement d'un aminoacide, de formule (13)

(13) $HO-(CO)_{q-1}-A'-NH_2$

où X', Y', $R_1$, q, p, A', B' et D' ont la même signification que pour la formule (2).

18. Procédé selon la revendication 17, caractérisé en ce qu'on part d'un composé de formule (11), respectivement (12), où X' représente une liaison directe ou un terme pontal de formule $-SO_2-$, $-CH_2-$, $-CH=CH-$ ou $-O-$, qui relie les deux noyaux benzéniques en position p par rapport aux groupes azo.

19. Procédé selon la revendication 17, caractérisé en ce qu'on part d'un composé de formule (11), respectivement (12), où les résidus $R_1$' représentent de l'hydrogène ou un groupe sulfo.

20. Procédé selon la revendication 17, caractérisé en ce qu'on part d'un composé de formule (10), où B' représente un phényle ou un naphtyle substitué par un groupe nitro ou sulfo ou bien nitro et sulfo.

21. Procédé selon la revendication 17, caractérisé en ce qu'on part d'un composé de formule (10) où D' représente un résidu naphtyle éventuellement substitué par un groupe sulfo ou amino et sulfo ou bien un résidu phényle éventuellement substitué par un alcoyle $C_1-C_5$.

22. Procédé selon la revendication 17, caractérisé en ce qu'on part d'un composé de formule (11), respectivement (12), où A' représente un groupe méthylène ou éthylène ou éthylidène et q = 2.

23. Procédé selon la revendication 17, caractérisé en ce qu'on part d'un composé de formule (11), respectivement (12) où A' représente un résidu phényle substitué par un groupe nitro ou sulfo ou bien nitro et sulfo et où q = 1.

24. Procédé selon l'une quelconque des revendications 13 à 23, caractérisé en ce qu'on choisit les produits de départ de façon à ce que le colorant complexe de chrome renferme 2 à 6 groupes sulfo.

25. Procédé pour teindre et imprimer du cuir, en utilisant les colorants définis par les revendications 1 à 12 et obtenus selon les revendications 13 à 24.

**Claims**

1. A chromium complex compound which, in the form of the free acid, has the formula

(1) 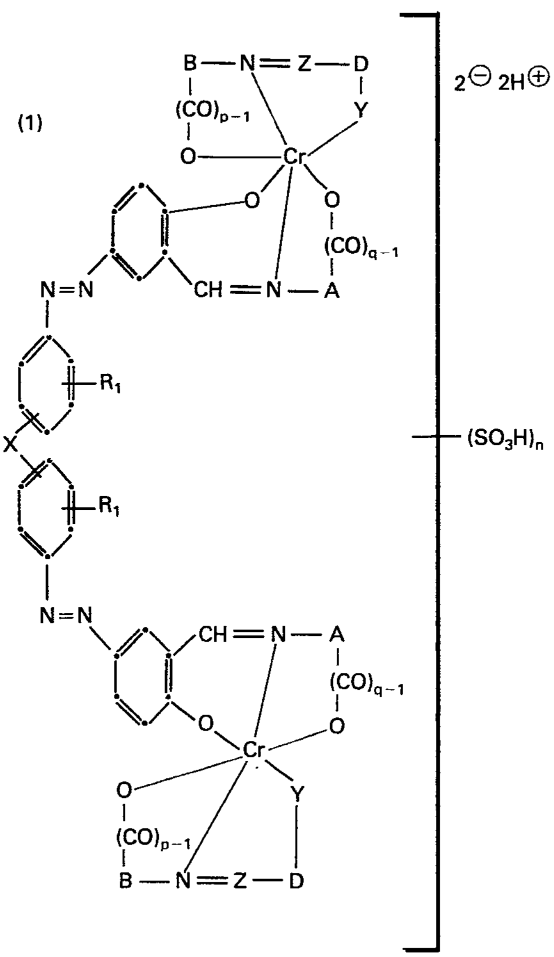

wherein X is a direct bond or a bridge member, each Z independently of the other is a nitrogen atom or a CH group, p and q independently of one an another are each 1 or 2, each Y independently of the other is an oxygen atom or a group of the formula –NR–, wherein R is hydrogen or $C_1-C_5$-alkyl, with the proviso that, when Z is a CH group, Y has to be an oxygen atom, each $R_1$ independent-

ly of the other is hydrogen or a substituent, each B independently of the other is a benzene or naphthalene radical, each D independently of the other is the radical of an o-hydroxy-aldehyde when Z is the CH group, or, when Z is a nitrogen atom, they are each the radical of a coupling component which couples in the ortho-position to Y, or of an acetoacetic acid amide, each A independently of the other is a benzene or naphthalene radical, or a substituted or unsubstituted aliphatic or cycloaliphatic radical, and n is an integer from 2 to 8, with the proviso that, when A is an aliphatic or cycloaliphatic radical, q has to be 2.

2. A chromium complex compound according to Claim 1 of the formula (1), wherein D–Y is the radical of a phenol, naphthol, naphthylamine, pyrazolone, pyrazolimine or pyridone or of an acetoacetic acid amide.

3. A chromium complex compound according to Claim 1 of the formula (1), wherein X is a direct bond, a substituted or unsubstituted methylene bridge, or a bridge of the formula –O–, –S–, –NR'–, –SO–, $-SO_2$, –CO–, –CO–CO–, –CO–NH–, –NH–CO–NH–, –NH–CS–NH–, $-SO_2-NH-$, $-SO_2-NH-SO_2-$, –N=N–, $-CH_2-CH_2-$ or –CH=CH–, wherein R' is hydrogen or $C_1$–$C_5$-alkyl.

4. A chromium complex compound according to Claim 1 of the formula (1), wherein Y is an oxygen atom or the –NH– group, and Z is a nitrogen atom.

5. A chromium complex compound according to Claims 1 to 4, which, in the form of the free acid, has the formula

(2)

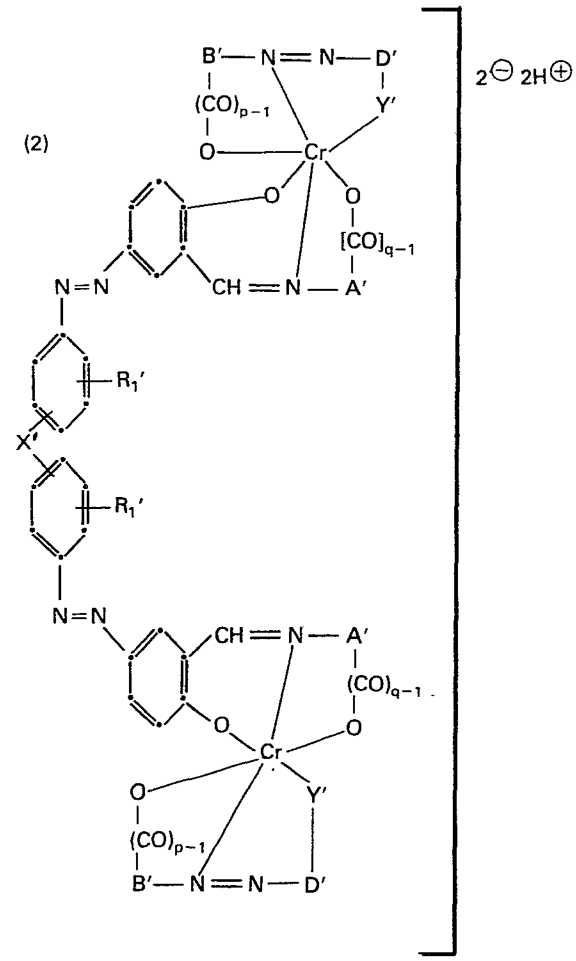

wherein X' is a direct bond or a bridge of the formula

$CH_2$–, 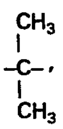 , 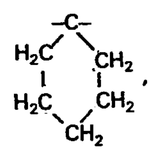 , –CH=CH–, $-SO_2-$, –N=N–, –O–,

or $-SO_2-NH-SO_2$, each Y' independently of the other is an oxygen atom or the –NH– group, each $R_1'$ independently of the other is hydrogen, the sulfo group, chlorine, methyl or methoxy, p is 1 or 2, q is 1 or 2, each B' independently of the other is a phenyl or naphthyl radical which is unsubstituted or substituted by sulfo, $C_1$–$C_5$-alkyl or $C_1$–$C_5$-alkoxy groups, chlorine, bromine, nitro or cyano, each D' independently of the other is a phenyl radical which is unsubstituted or substituted by hydroxyl, $C_1$–$C_5$-alkyl or $C_1$–$C_5$-alkoxy, a naphthyl radical which is unsubstituted or substituted by chlorine, low-molecular alkanoylamino, alkylsulfonylamino or alkoxycarbonylamino, also by aroylamino or arylsulfonylamino, sulfo or amino and sulfo, or they are each the radical of a 1-aryl-3-methylpyrazol-5-one or the radical of an acetoacetic acid anilide which is unsubstituted or substituted in the anilide nucleus by sulfo, nitro, chlorine, bromine, $C_1$–$C_5$-alkyl or $C_1$–$C_5$-alkoxy, and wherein each A' independently of the other has, when q is 1, one of the meanings given for B', or is, when q is 2, an unsubstituted or substituted alkylene group, whereby the number of sulfo groups has to be 2 to 8, and where the term «low-molecular» denotes radicals having up to 5 carbon atoms.

6. A chromium complex compound according to Claim 5, wherein X' is a direct bond or a bridge member of the formula $-SO_2-$, $-CH_2-$, –CH=CH– or –O– which links the two benzene nuclei in the para-position to the azo groups.

7. A chromium complex compound according to Claim 5, wherein the symbols $R_1'$ are each hydrogen or a sulfo group.

8. A chromium complex compound according to Claim 5, wherein each B' is phenyl or naphthyl substituted by nitro or sulfo or by nitro and sulfo.

9. A chromium complex compound according to Claim 5, wherein each D' is a naphthyl radical which is unsubstituted or substituted by sulfo or

by amino and sulfo, or it is a phenyl radical which is unsubstituted or substituted by $C_1$–$C_5$-alkyl.

10. A chromium complex compound according to Claim 5, wherein q is 2, and each A' is a methylene, ethylene or ethylidene group.

11. A chromium complex compound according to Claim 5, wherein q is 1, and each A' is a phenyl radical which is substituted by nitro or sulfo or by nitro and sulfo.

12. A chromium complex compound according to Claims 1 to 11, which contains 2 to 6 sulfo groups.

13. A process for producing a chromium complex compound according to Claim 1, wherein a compound of the formula

(3) 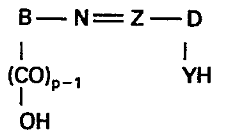

or

(4) 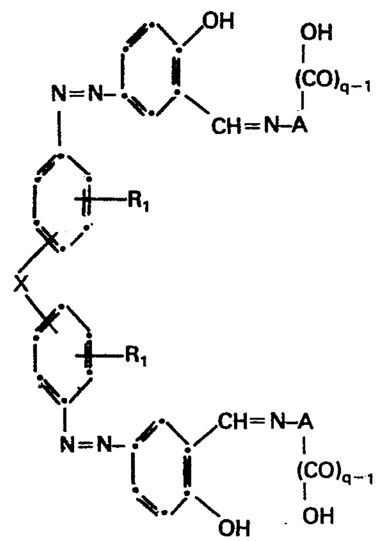

wherein $R_1$, X, Y, Z, A, B, D and p and q are as defined under the formula (1), is reacted with a chromium-releasing agent to form the 1:1-chromium complex, or, in the case of the formula (4), the chromium complex containing 2 atoms of chromium per molecule, and this is subsequently reacted with the non-metallised compound of the formula (4) or (3), the starting compounds being so selected that the chromium complex contains 2 to 8 sulfo groups; or wherein a compound of the formula (3) is converted into the 1:1-chromium complex, and this is reacted with a mixture of a dialdehyde of the formula

5 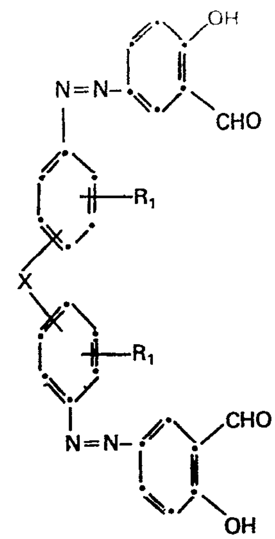

and 2 equivalents of an amine or of an amino acid of the formula

(6) $HO-(CO)_{q-1}-A-NH_2$

wherein X, $R_1$, A and q are as defined under the formula (1).

14. A process according to Claim 13, wherein there is used the 1:1-chromium complex of a compound of the formula (3) in which –D–YH is the radical of a phenol, naphthol, naphthylamine, pyrazolone, pyrazolimine or pyridone, or of an acetoacetic acid amide.

15. A process according to Claim 13, wherein there is used a bisazomethine of the formula (4) or a dialdehyde of the formula (5), in which X is a direct bond, an unsubstituted or substituted methylene bridge or a bridge of the formula $-O-$, $-S-$, $-NR'-$, $-SO-$, $-SO_2-$, $-CO-$, $-CO-CO-$, $-CO-NH-$, $-NH-CO-NH-$, $-NH-CS-NH-$, $-SO_2-NH-$, $-SO_2-NH-SO_2-$, $-N{=}N-$, $-CH_2-CH_2-$ or $-CH{=}CH-$, wherein R' is hydrogen or $C_1$–$C_5$-alkyl.

16. A process according to Claim 13, wherein a starting material is a compound of the formula (3) in which Y is an oxygen atom or the –NH group, and Z is a nitrogen atom.

17. A process according to Claims 13 to 16 for producing a chromium-complex compound according to Claim 5, wherein 2 equivalents of a 1:1-chromium complex of a compound of the formula

(10) 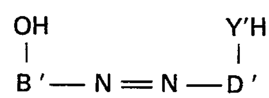

are reacted with one equivalent of a bisazomethine of the formula

(11) 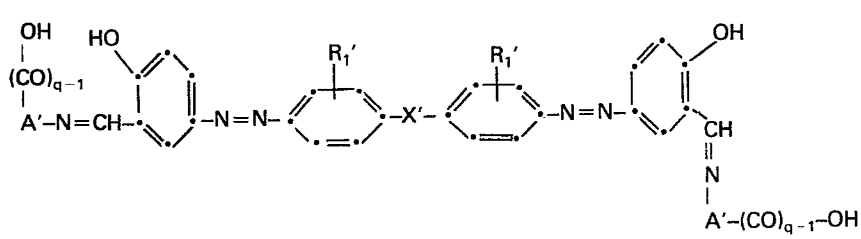

or with one equivalent of a dialdehyde of the formula

(12) 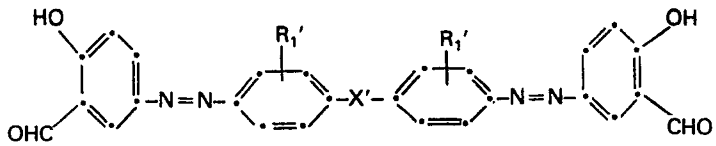

and 2 equivalents of an amine or of an amino acid of the formula

(13) $HO-(CO)_{q-1}-A'-NH_2$

wherein X', Y', $R_1$, q, p, A', B' and D' have the meanings defined under the formula (2).

18. A process according to Claim 17, wherein a starting material is a compound of the formula (11) or (12) in which X' is a direct bond or a bridge member of the formula $-SO_2-$, $-CH_2-$, $-CH{=}CH-$ or $-O-$, which links the two benzene nuclei in the para-position to the azo groups.

19. A process according to Claim 17, wherein a starting material is a compound of the formula (11) or (12) in which the symbols $R_1'$ denote hydrogen or a sulfo group.

20. A process according to Claim 17, wherein a starting material is a compound of the formula (10) in which B' is phenyl or naphthyl which is substituted by nitro or sulfo or by nitro and sulfo.

21. A process according to Claim 17, wherein a starting material is a compound of the formula (10) in which D' is a naphthyl radical which is unsubstituted or is substituted by sulfo or by amino and sulfo, or it is a phenyl group which is unsubstituted or substituted by $C_1-C_5$-alkyl.

22. A process according to Claim 17, wherein a starting material is a compound of the formula (11) or (12) in which A' is a methylene, ethylene or ethylidene group, and q is 2.

23. A process according to Claim 17, wherein a starting material is a compound of the formula (11) or (12) in which A' is a phenyl group which is substituted by nitro or sulfo or by nitro and sulfo, and q is 1.

24. A process according to Claims 13 to 23, wherein the starting materials are so selected that the chromium- complex dye contains 2 to 6 sulfo groups.

25. A process for dyeing and printing leather by use of the dyes defined according to Claims 1 to 12 or obtained according to Claims 13 to 24.